# EUROPEAN PATENT APPLICATION

(11) **EP 2 677 483 A1**
(43) Date of publication of application: **25.12.2013**
(21) Application number: 12867730.9
(22) Date of filing: 10.04.2012
(51) Int. Cl.: G06Q 20/24

(54) **DEVICE FOR PROCESSING INFORMATION, METHOD FOR PROCESSING INFORMATION, PROGRAM FOR PROCESSING INFORMATION, AND RECORDING MEDIUM**

(30) Priority: 29.02.2012 JP 2012043967
(71) Applicant: Rakuten, Inc., Tokyo 140-0002 (JP)
(72) Inventor: NANJO, Kaori, Tokyo 140-0002 (JP); ENDO, Shizuka, Tokyo 140-0002 (JP); OKUNO, Tatsuko, Tokyo 140-0002 (JP)
(74) Representative: EIP
(86) International application number: PCT/JP2012/059791
(87) International publication number: WO 2013/128656

(57) **Abstract**

When an information processing apparatus cannot confirm validity of a designated credit card for a request of a reservation, the information processing apparatus accepts the reservation and stores information of the designated credit card in a storage means. After the reservation is accepted, the information processing apparatus checks the validity of the designated credit card on the basis of the information stored in the storage means. At this time, if the validity can be confirmed, the information processing apparatus outputs information indicating that a settlement method is determined to be a settlement by the designated credit card. On the other hand, if the validity cannot be confirmed, the information processing apparatus outputs information indicating that the settlement method is determined to be a method different from the settlement by the designated credit card.

## Description

### Technical Field

The present invention relates to a technical field of information processing apparatus and information processing method for performing a process to settle a usage fee of a reserved service by credit card.

### Background Art

Conventionally, a reservation system which accepts a reservation of use of a service such as, for example, an accommodation reservation of an accommodation facility, on the Internet is known. Among such reservation systems, there is a system in which online card settlement is available. If a user designates the online card settlement as a settlement method when making a reservation, the reservation system automatically performs a settlement process of a usage fee by a credit card on or after the date of use of the reserved service. In this case, the user needs not to perform procedure of settlement when using the service.

If the online card settlement is designated as a settlement method, the reservation system checks validity of the credit card when the reservation is requested. When checking the validity, if the reservation system determines that a usage fee cannot be settled by the designated credit card, the reservation system does not accept the reservation to be settled by the credit card designated by a user. For example, Patent Literature 1 describes a technique for requesting a customer to change the credit card or cancel a purchase when the credit cannot be confirmed.

### Citation List

### Patent Literature

Patent Literature 1: Japanese Patent Application Laid-Open No. 2002-163527

### Summary of Invention

### Technical Problem

However, even when information of the credit card designated by the user is valid, there may be a case in which settlement cannot be performed by the designated credit card. For example, there is a case in which a usage fee of a service to be reserved exceeds the available credit of the credit card when the reservation is requested. In such a case, if the reservation is not accepted, the user may give up the reservation. Then, the provider of the service loses a chance to provide the service. Further, the user cannot make a reservation using a credit card which the user wants to use.

The present invention is made in view of the above problem and an object of the present invention is to provide an information processing apparatus, an information processing method, an information processing program, and a recording medium, which can accept a reservation where even if there is no credit for settling a usage fee by a credit card which a user wants to use when a reservation is requested, the usage fee can be settled by the credit card when the credit is restored.

### Solution to Problem

In order to achieve the above object, an invention described in claim 1 is an information processing apparatus, comprising: a reservation means that, when validity of a designated credit card cannot be confirmed for a request of a reservation where a usage fee is settled by the designated credit card on or after a date of use of a service, accepts the reservation and stores information of the designated credit card in a storage means; a check means that, after the reservation is accepted by the reservation means, checks the validity of the designated credit card on the basis of the information stored in the storage means; and an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.

According to this invention, even if there is no credit for settling the usage fee by the credit card which the user wants to use when the reservation is requested, if the credit is restored thereafter, it is possible to set the settlement method to the settlement by the credit card which the user wants to use. Therefore, the information processing apparatus can accept a reservation which will be able to be settled by the credit card which the user wants to use.

An invention described in claim 2 is the information processing apparatus according to claim 1, wherein when a number of days of use of the service whose reservation is accepted by the reservation means is greater than or equal to a number of credit days which corresponds to a period where credit of settlement using the credit card is given, the check means checks the validity of the designated credit card by the day before a date on which use of the service where reservation is accepted is started.

An invention described in claim 3 is the information processing apparatus according to claim 2, further comprising: a second check means that, after the validity of the designated credit card can be confirmed by the check means, checks the validity of the designated credit card on the basis of the information stored in the storage means on or after a date on which a number of days to a settlement date of the usage fee is the number of the credit days, and wherein, when the validity of the designated credit card cannot be confirmed by the second check means, the output means outputs information indicating that the settlement method is determined to be a method different from the settlement method by the designated credit card.

According to the present invention, the validity of the credit card is checked before the date on which the use of the service is started, and thereafter, the validity of the credit card is further checked so that the settlement is performed within the credit period. At this time, if the validity cannot be confirmed, the settlement method can be changed. Therefore, it is possible to improve the safety of the settlement of the usage fee of the service.

According to the invention, for a reservation where, if the validity of the credit card is checked so that the settlement is performed within the credit period, the check date is on or after a date on which use of the service is start day, it is possible to check the validity before the date on which use of the service is start. Therefore, the provider of the service can start providing the service while it is secured that the user can settle the usage fee by the credit card.

An invention described in claim 4 is the information processing apparatus according to any one of claims 1 to 3, further comprising: a settlement means that, when a fee is incurred by use of a reserved service in addition to the usage fee for which the validity of the designated credit card can be confirmed by the check means, performs settlement of the usage fee including the incurred fee by the designated credit card on the basis of the information stored in the storage means.

According to this invention, if a new fee occurs when the user uses the service, the user can perform settlement by the credit card which the user wants to use without performing a procedure of the settlement.

An invention described in claim 5 is the information processing apparatus according to any one of claims 1 to 4, further comprising: a determination means that determines whether or not a reason why the validity of the designated credit card for the request cannot be confirmed is because the usage fee exceeds available credit of the designated credit card, wherein, when the determination means determines that the reason is because the usage fee exceeds available credit of the designated credit card, the reservation means accepts the reservation and stores the information of the designated credit card in the storage means.

According to this invention, when the reason why the validity of the credit card cannot be confirmed when the reservation is requested is because the usage fee of the service to be reserved exceeds the available credit of the credit card, the reservation is accepted and thereafter the validity of the credit card is checked once again. There is probability that the available credit of the credit card increases from when the reservation is requested. Therefore, the information processing apparatus can accept only a reservation where probability that the validity can be confirmed is high. Thereby, it is possible to prevent the information processing apparatus from unnecessarily re-checking the validity of the credit card.

An invention described in claim 6 is the information processing apparatus according to any one of claims 1 to 5, further comprising: a storage control means that stores a validity check date of the designated credit card for the request and a validity check date by the check means in a check date storage means; and an estimation means that estimates a date on which the designated credit card becomes valid on the basis of the check dates stored in the check date storage means, wherein the check means checks validity of the designated credit card on a date estimated by the estimation means.

According to the present invention, the validity is checked on a date on which the designated credit card is estimated to be valid, so that it is possible to increase the probability that the credit for settling the usage fee is restored and thereby the credit card can be confirmed to be valid.

An invention described in claim 7 is an information processing method executed by a computer, the information processing method comprising: a reservation step of, when validity of a designated credit card cannot be confirmed for a request of a reservation where a usage fee is settled by the designated credit card on or after a date of use of a service, accepting the reservation and storing information of the designated credit card in a storage means; a check step of, after the reservation is accepted in the reservation means, checking the validity of the designated credit card on the basis of the information stored in the storage means; and an output step of outputting information indicating that a settlement method is determined to be a settlement by the designated credit card when the validity of the designated credit card can be confirmed in the check step and outputting information indicating that the settlement method is determined to be a method different from the settlement by the designated credit card when the validity of the designated credit card cannot be confirmed in the check step.

An invention described in claim 8 is an information processing program that causes a computer to function as: a reservation means that, when validity of a designated credit card cannot be confirmed for a request of a reservation where a usage fee is settled by the designated credit card on or after a date of use of a service, accepts the reservation and stores information of the designated credit card in a storage means; a check means that, after the reservation is accepted by the reservation means, checks the validity of the designated credit card on the basis of the information stored in the storage means; and an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.

An invention described in claim 9 is a recording medium that computer-readably stores an information processing program that causes a computer to function as: a reservation means that, when validity of a designated credit card cannot be confirmed for a request of a reservation where a usage fee is settled by the designated credit card on or after a date of use of a service, accepts the reservation and stores information of the designated credit card in a storage means; a check means that, after the reservation is accepted by the reservation means, checks the validity of the designated credit card on the basis of the information stored in the storage means; and an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.

### Advantageous Effects of Invention

According to the present invention, even if there is no credit for settling the usage fee by the credit card which the user wants to use when the reservation is requested, if the credit is restored thereafter, it is possible to set the settlement method to the settlement by the credit card which the user wants to use. Therefore, the information processing apparatus can accept a reservation which will be able to be settled by the credit card which the user wants to use.

### Brief Description of Drawings

Fig. 1 is a diagram showing an example of a schematic configuration of an information processing system S according to an embodiment.
Fig. 2 is a diagram showing a flow from reservation to settlement.
Fig. 3 is a diagram showing a screen display example of a settlement method change page.
Fig. 4 is a diagram showing a flow from reservation to settlement in a case in which the number of days in which an accommodation facility is used is greater than or equal to the number of days of credit period.
Fig. 5 is a block diagram showing an example of a schematic configuration of an accommodation facility reservation server 1 according to an embodiment.
Fig. 6A is a diagram showing an example of information registered in a member information DB 12a. Fig. 6B is a diagram showing an example of information registered in an accommodation facility information DB 12b. Fig. 6C is a diagram showing an example of information registered in a reservation information DB 12c.
Fig. 7 is a flowchart showing a process example of a reservation process of a system control unit 14 in the accommodation facility reservation server 1 according to an embodiment.
Fig. 8 is a flowchart showing a process example of a settlement method change reservation process of the system control unit 14 in the accommodation facility reservation server 1 according to an embodiment.
Fig. 9 is a flowchart showing a process example of the credit re-check process of the system control unit 14 in the accommodation facility reservation server 1 according to an embodiment.
Fig. 10 is a flowchart showing a process example of a credit re-re-check process of the system control unit 14 in the accommodation facility reservation server 1 according to an embodiment.
Fig. 11 is a flowchart showing a process example of an optional fee registration process of the system control unit 14 in the accommodation facility reservation server 1 according to an embodiment.
Fig. 12 is a flowchart showing a process example of a settlement process of the system control unit 14 in the accommodation facility reservation server 1 according to an embodiment.

### Description of Embodiment

Hereinafter, an embodiment of the present invention will be described in detail with reference to the drawings. The embodiment described below is an embodiment in which the present invention is applied to an information processing system.

### [1. Configuration and function outline of information processing system]

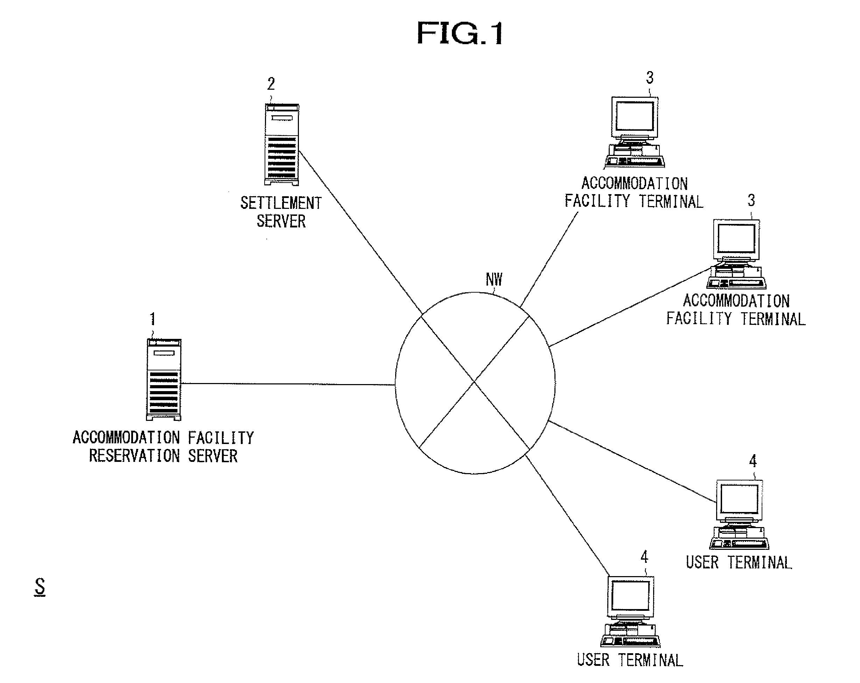

First, a configuration and a function outline of an information processing system S according to the present embodiment will be described with reference to Fig. 1. Fig. 1 is a diagram showing an example of a schematic configuration of the information processing system S according to the present embodiment.

As shown in Fig. 1, the information processing system S includes an accommodation facility reservation server 1, a settlement server 2, a plurality of accommodation facility terminals 3, and a plurality of user terminals 4. The accommodation facility reservation server 1, the settlement server 2, and the accommodation facility terminals 3, and the user terminals 4 can transmit and receive data to and from each other via a network NW using, for example, TCP/IP as a communication protocol. The network NW is constructed by, for example, the Internet, a dedicated communication line (for example, CATV (Community Antenna Television) line), a mobile communication network (including a base station), a gate way, and the like.

The accommodation facility reservation server 1 is a server apparatus that performs various processes related to an accommodation facility reservation site. The accommodation facility reservation server 1 is an example of an information processing apparatus of the present invention. The accommodation facility reservation site is a Web site that receives a reservation of accommodation in an accommodation facility. The accommodation facility reservation site is entrusted by a plurality of accommodation facilities to receive reservations. For example, the accommodation facility reservation server 1 transmits a Web page of an accommodation facility reservation site and performs processing related to search for an accommodation facility and reservation of accommodation according to a request from the user terminal 4. For example, the accommodation facility reservation server 1 transmits a request to the settlement server 2, so that the accommodation facility reservation server 1 checks validity of a credit card and performs a process to settle an accommodation fee of an accommodation facility.

The settlement server 2 is a server apparatus that performs various processes related to settlement by credit card. For example, the settlement server 2 determines approval or disapproval of credit of a credit card and performs a process of settlement on the basis of a request from the accommodation facility reservation server 1. Although Fig. 1 shows only one settlement server 2, for example, the settlement server 2 is provided for each credit card company that issues credit cards available for an accommodation reservation site.

The accommodation facility terminal 3 is a terminal apparatus used by a provider of an accommodation facility that entrusts the accommodation facility reservation site to receive reservation. The accommodation facility terminal 3 accesses a server apparatus such as the accommodation facility reservation server 1 on the basis of an operation from the provider. Thereby, the accommodation facility terminal 3 receives a Web page from the server apparatus and displays the Web page. Software such as a browser and an e-mail client is installed in the accommodation facility terminal 3. For example, the provider uses the accommodation facility terminal 3, so that the provider registers information of the accommodation facility in an accommodation facility reservation site and checks reservation status of the accommodation facility.

The user terminal 4 is a terminal apparatus of a user who uses an accommodation facility reservation site. The user terminal 4 accesses the accommodation facility reservation server 1 on the basis of an operation from the user, so that the user terminal 4 receives a Web page from the accommodation facility reservation server 1 and displays the Web page. Software such as a browser and an e-mail client is installed in the user terminal 4. As the user terminal 4, for example, a personal computer, a portable information terminal such as a PDA (Personal Digital Assistant) and a smart phone, and a mobile phone are used.

### [2. Reservation by online card settlement]

When a user reserves a use of an accommodation facility on an accommodation facility reservation site, the user can specify a settlement method of the accommodation facility. As the settlement method, there are on-site settlement and online card settlement. In the on-site settlement, when the user checks in the accommodation facility or checks out from the accommodation facility, the user performs settlement at the accommodation facility. At this time, the user can select, for example, cash settlement, credit card settlement, and the like. In the online card settlement, the accommodation facility reservation server 1 performs settlement of the accommodation fee by using a credit card designated by the user. In the present embodiment, the settlement date of the online card settlement is the following day of the day of check-out. For example, the accommodation fee settled by the online card settlement is transferred to a bank account of the accommodation facility from the accommodation facility reservation site. If the user specifies the online card settlement, the user does not need to perform a process of settlement at the accommodation facility when the user uses the accommodation facility. The settlement day of the online card settlement is not limited to the following day of the day of check-out. The settlement day of the online card settlement may be any day on or after the day of check-in. Any day on or after the date of check-in includes the day of check-in and days after the day of check-in.

When the user specifies the online card settlement and requests reservation, the accommodation facility reservation server 1 checks validity of a credit card designated by the user. The reason to do this is to determine whether or not the user has the capacity to settle the accommodation fee by the designated credit card. And, the reason is to secure a credit frame corresponding to the accommodation fee. The confirmation of the validity of the credit card includes a check whether or not information of the credit card designated by the user corresponds to information of a duly issued credit card, a check whether or not the validity period of the credit card expires, and a check whether or not the currently available credit of the credit card is greater than the accommodation fee. The available credit of the credit card is a value obtained by subtracting a value corresponding to a currently secured credit frame from the credit limit amount of the credit card. The process for confirming the validity of the credit card is called an "authori-process". The "authori" is an abbreviation of authorization. In the present embodiment, confirming the validity of the credit card is referred to as confirming the credit of the credit card. When the credit can be confirmed, the credit for settling the usage fee by the designated credit card is given. In other words, it is guaranteed that an amount of money corresponding to the credit frame can be settled. However, the confirmed credit is valid only for a predetermined period and when the predetermine period expires, the credit becomes invalid. This period is the credit period. The credit period is a period in which credit for settlement by the credit card is given. When the credit period expires, the secured credit frame is lost. The number of days of the credit period is determined in advance. For example, in the present embodiment, the number of days of the credit period is 30. However, the number of days of the credit period may be other than 30. The number of days of the credit period is an example of the number of credit days of the present invention.

When the credit cannot be confirmed when the reservation is requested, the accommodation facility reservation server 1 cannot perform settlement of the accommodation fee by the online card settlement if this goes on. However, even when the information of the credit card designated by the user is information of a valid credit card when the reservation is requested, there may be a case in which the credit cannot be confirmed. This is the case in which the accommodation fee exceeds the available credit of the credit card as described above. That is to say, a case in which a used amount of money of the credit card in the month in which the user tries to make the reservation is too large. In this case, if the accommodation facility reservation server 1 does not accept the reservation by the online card settlement by the credit card designated by the user, it is inconvenient for the user. Further, the user may give up making the reservation on the accommodation facility reservation site. Then, the provider of the accommodation facility loses a chance to provide the accommodation facility because the reservation is not made.

In the information processing system S, even when the credit of the credit card cannot be confirmed when the reservation is requested, the accommodation facility reservation server 1 accepts the reservation. At this time, the accommodation facility reservation server 1 stores information of the credit card designated by the user. Thereafter, the accommodation facility reservation server 1 performs the credit check again on the basis of the stored information of the credit card. The second credit check is referred to as "credit re-check". When the accommodation facility reservation server 1 can confirm the credit at the second credit re-check, the accommodation facility reservation server 1 outputs information indicating that the online card settlement by the credit card designated by the user when a reservation is made is used as the settlement method. On the other hand, when the accommodation facility reservation server 1 cannot confirm the credit, the accommodation facility reservation server 1 maintains the received reservation and outputs information indicating that a settlement method different from the online card settlement by the credit card designated by the user when a reservation is made is used as the settlement method.

The reason why the accommodation facility reservation server 1 performs the credit re-check is because, even if there is no credit for settling the accommodation fee by the credit card when the reservation is made, the credit may recover thereafter. For example, once a month, there is a day when the credit frame where settlement processing is performed in the past one month is cleared. The date when the credit frame is cleared is referred to as "credit frame clear date". In practice, for example, at a timing at which the day before the credit frame clear date turns to the credit frame clear date, the credit frame is cleared. When the credit frame is cleared, the available credit of the credit card increases on the credit frame clear date. The credit frame clear date is defined, for example, for each credit card company. For example, the credit frame clear date is the first day of a month. For example, the credit frame clear date is a withdrawal day. The withdrawal day is a day when an amount of money settled by the credit card is withdrawn from the bank account of the user. The credit frame may be cleared even if it is not the credit frame clear date. For example, the credit frame is cleared when a transaction corresponding to the secured credit frame is cancelled. When the available credit of the credit card is greater than or equal to the accommodation fee, if the accommodation facility reservation server 1 performs the credit re-check, the accommodation facility reservation server 1 can confirm the credit. Therefore, the accommodation facility reservation server 1 can perform the online card settlement. For the user, there is an advantage that the user need not perform an operation to request the reservation by designating the online card settlement again after the available credit of the credit card increases.

The accommodation facility reservation server 1 may perform the credit re-check on any day from the day when the number of days from the day to the check-in date is the number of days of the credit period to the day prior to the check-in date. This is because the safety of the settlement of the accommodation fee can be improved by performing the credit re-check at this timing. The reason of the above is that the user starts the use of the accommodation facility on the check-in date in a state in which the credit of the credit card designated by the user is confirmed. For example, if the capacity of settlement by the credit card is lost while the user stays in the accommodation facility, the provider of the accommodation facility may directly request the user who stays in the accommodation facility to perform settlement of the accommodation fee. Further, there may be a case in which the user cancels the reservation or the user does not show at the accommodation facility on the check-in date without any notice. In this case, for example, the accommodation facility reservation server 1 may perform settlement of a cancellation fee in the credit period within the secured credit frame on the basis of a request from the provider of the accommodation facility.

The accommodation facility reservation server 1 may perform the credit re-check on any day on or after the date when the number of days to the settlement date becomes the number of days of the credit period. This is because the safety of the settlement of the accommodation fee can be further improved by performing the credit re-check at this timing. The reason of the above is that when the credit can be confirmed at the credit re-check, the accommodation facility reservation server 1 can perform settlement of the accommodation fee on the settlement date on the basis of the credit frame secured at this time.

The accommodation facility reservation server 1 may perform the credit re-check on the credit frame clear date. This is because the probability that the credit can be confirmed can be increased by performing the credit re-check at this timing.

In the present embodiment, the accommodation facility reservation server 1 performs the credit re-check on the credit frame clear date among the days on or after the date when the number of days to the settlement date becomes the number of days of the credit period. If there is no credit frame clear date from the day when the number of days to the settlement date becomes the number of days of the credit period to the day prior to the check-in date, the accommodation facility reservation server 1 may perform the credit re-check on another day or need not accept the reservation by the online card settlement.

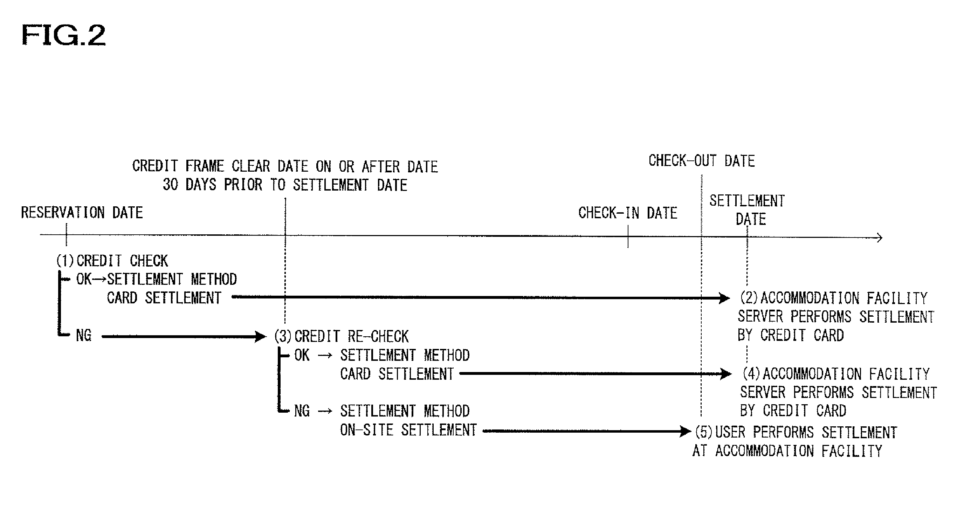

Hereinafter, an outline of the process from the reservation to the settlement will be described. Fig. 2 is a diagram showing a flow from the reservation to the settlement. Fig. 2 shows an example of a case in which the number of days of the credit period is 30. In Fig. 2, "OK" indicates a case in which the credit is confirmed and "NG" indicates a case in which the credit is not confirmed.

As shown in Fig. 2, the user designates the online card settlement and performs an operation to make a reservation. Then, the accommodation facility reservation server 1 performs the credit check of the designated credit card (Fig. 2 (1)). At this time, if the accommodation facility reservation server 1 can confirm the credit, the accommodation facility reservation server 1 accepts the reservation by using the online card settlement as the settlement method. Then, after the user stays in the accommodation facility, the accommodation facility reservation server 1 performs settlement of the accommodation fee on the following day of the check-out date by the credit card designated when the reservation is made (Fig. 2 (2)).

On the other hand, when the accommodation facility reservation server 1 cannot confirm the credit, the accommodation facility reservation server 1 also accepts the reservation. Thereafter, on the credit frame clear date on or after the day 30 days prior to the settlement date, the accommodation facility reservation server 1 performs the credit re-check of the credit card designated when the reservation is made (Fig. 2(3)). At this time, if the credit can be confirmed, the accommodation facility reservation server 1 determines the settlement method to be the online card settlement. Then, the accommodation facility reservation server 1 performs settlement of the accommodation fee on the following day of the check-out date by the credit card designated when the reservation is made (Fig. 2 (4)).

On the other hand, when the credit cannot be confirmed at the credit re-check, the accommodation facility reservation server 1 determines the settlement method to be the cash settlement. Thereafter, when the user stays in the accommodation facility and checks out from the accommodation facility, the user performs settlement of the accommodation fee at the accommodation facility (Fig. 2 (5)).

In Fig. 2 (1), if the accommodation facility reservation server 1 cannot confirm the credit when the reservation is requested, in practice, before accepting the reservation, the accommodation facility reservation server 1 transmits a settlement method change page to the user terminal 4 of the user who requests the reservation. The settlement method change page is a Web page for changing the settlement method.

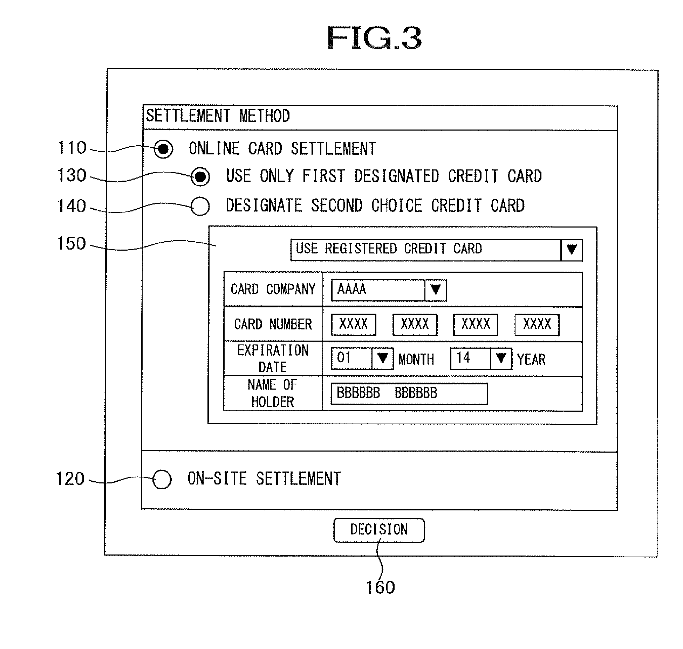

Fig. 3 is a diagram showing a screen display example of the settlement method change page. As shown in Fig. 3, the settlement method change page includes radio buttons 110, 120, 130, and 140, a second choice card designation area 150, and a decision button 160. The radio button 110 is a radio button to select the online card settlement as the settlement method. The radio button 120 is a radio button to select the on-site settlement as the settlement method. The radio button 130 is a radio button to select that only a credit card that is first designated is used for the online card settlement. The radio button 140 is a radio button to select that a credit card other than the credit card that is first designated may be used for the online card settlement as a second choice credit card. Here, the credit card that is first designated when the reservation is requested is referred to as a "first choice credit card". Only when the user selects the radio button 110 from the radio buttons 110 and 120, the user can select either one of the radio buttons 130 and 140. The second choice card designation area 150 is information for designating the second choice credit card. Only when the user selects the radio button 140 from the radio buttons 130 and 140, the user can select the second choice credit card in the second choice card designation area 150. In the second choice card designation area 150, the user can select either one of a credit card registered in the accommodation facility reservation site in advance and another credit card as the second choice credit card. When the user selects another credit card as the second choice credit card, the user can input information of the second choice credit card in the second choice card designation area 150. The information that can be inputted includes a credit card company, a card number, an expiration date, a name of the holder, and the like. The decision button 160 is a button to decide the changed content of the settlement method.

When the user does not change the settlement method from the online card settlement and uses only the credit card designated when the reservation is requested for the online card settlement, the user selects the radio buttons 110 and 130. When the user does not change the settlement method from the online card settlement but may use the second choice credit card for the online card settlement, the user selects the radio buttons 110 and 140 and designates the second choice credit card in the second choice card designation area 150. On the other hand, when the user changes the settlement method to the on-site settlement, user selects the radio button 120.

When the user selects that the settlement method is not changed from the online card settlement and only the credit card designated when the reservation is requested is used for the online card settlement, in Fig. 2 (1), the accommodation facility reservation server 1 accepts the reservation by using the online card settlement as the settlement method. Thereafter, in Fig. 2 (3), the accommodation facility reservation server 1 checks the credit of the first choice credit card. At this time, if the credit can be confirmed, the accommodation facility reservation server 1 does not change the settlement method. The accommodation facility reservation server 1 outputs information indicating that the online card settlement by the first choice credit card is used. As the above information, the accommodation facility reservation server 1 transmits, for example, online card settlement notice e-mail to the user who made the reservation. The online card settlement notice e-mail is e-mail which notices that the settlement method is not changed from the online card settlement by the first choice credit card. Thereafter, the accommodation facility reservation server 1 performs settlement of the accommodation fee by the first choice credit card (Fig. 2(4)).

When the credit cannot be confirmed at the credit re-check, the accommodation facility reservation server 1 changes the settlement method from the online card settlement to the on-site settlement. Then, the accommodation facility reservation server 1 outputs information indicating that the settlement method is changed from the online card settlement. As the above information, the accommodation facility reservation server 1 transmits, for example, on-site settlement notice e-mail to the user who made the reservation. The on-site settlement notice e-mail is e-mail which notices that the settlement method is changed from the online card settlement to the on-site settlement. For example, the user who receives the on-site settlement notice e-mail via the user terminal 4 can change the settlement method to the online card settlement by designating a credit card different from the credit card designated when the reservation is made.

When the user selects that the settlement method is not changed from the online card settlement but the second choice credit card may be used for the online card settlement, the accommodation facility reservation server 1 checks the credit of the second choice credit card in Fig. 2 (1). At this time, if the credit cannot be confirmed, the accommodation facility reservation server 1 does not accept the reservation and transmits the settlement method change page again. On the other hand, if the credit can be confirmed, the accommodation facility reservation server 1 accepts the reservation by using the online card settlement as the settlement method. Thereafter, in Fig. 2 (3), the accommodation facility reservation server 1 checks the credit of the first choice credit card, and if the credit can be confirmed, the accommodation facility reservation server 1 transmits the online card settlement notice e-mail. Thereafter, the accommodation facility reservation server 1 performs settlement of the accommodation fee by the first choice credit card (Fig. 2 (4)).

If the credit of the first choice credit card cannot be confirmed, the accommodation facility reservation server 1 checks the credit of the second choice credit card. At this time, if the credit can be confirmed, the accommodation facility reservation server 1 does not change the settlement method. Thereafter, the accommodation facility reservation server 1 performs settlement of the accommodation fee by the second choice credit card (Fig. 2 (4)). On the other hand, when the credit cannot be confirmed, the accommodation facility reservation server 1 changes the settlement method to the on-site settlement and transmits the on-site settlement notice e-mail.

When the user selects that the settlement method is changed to the on-site settlement, in Fig. 2 (1), the accommodation facility reservation server 1 accepts the reservation by using the on-site settlement as the settlement method. Thereafter, in Fig. 2 (3), the accommodation facility reservation server 1 checks the credit of the first choice credit card. At this time, if the credit cannot be confirmed, the accommodation facility reservation server 1 does not change the settlement method. On the other hand, if the credit can be confirmed, the accommodation facility reservation server 1 outputs information indicating that the settlement method is not changed but the online card settlement by the first choice credit card is used. As the above information, the accommodation facility reservation server 1 transmits, for example, settlement method restoration possible notice e-mail. The settlement method restoration possible notice e-mail is e-mail which notices that the settlement method can be restored from the on-site settlement to the online card settlement by the first choice credit card. The reason why the accommodation facility reservation server 1 does not change the settlement method at this time is to respect the latest selection of the user.

In the settlement method restoration possible notice e-mail, for example, a URL for restoring the settlement method is described. When the user selects the URL, the user terminal 4 transmits a request to the accommodation facility reservation server 1 and the accommodation facility reservation server 1 transmits a settlement method restoration approval page to the user terminal 4. The settlement method restoration approval page is a Web page for approving the restoration of the settlement method. In the settlement method restoration approval page, when the user selects a button for approving the restoration of the settlement method, the accommodation facility reservation server 1 restores the settlement method from the on-site settlement to the online card settlement by the first choice credit card. The accommodation facility reservation server 1 may limit a period of time in which the settlement method can be restored to the online card settlement. For example, the accommodation facility reservation server 1 may limit the period of time in which the settlement method can be restored to the online card settlement to days prior to the check-in date.

The accommodation facility reservation server 1 transmits e-mail in which reservation information is described to the user who made the reservation of the accommodation facility on the previous day of the check-in date. Therefore, the accommodation facility reservation server 1 may describe the fixed settlement method in the e-mail in which reservation information is described instead of transmitting the online card settlement notice e-mail or the on-site settlement notice e-mail.

When the accommodation facility reservation server 1 cannot confirm the credit of the first choice credit card when the reservation is requested, the accommodation facility reservation server 1 need not transmit the settlement method change page. In this case, the accommodation facility reservation server 1 performs the same process as that performed when the user selects that the settlement method is not changed from the online card and only the credit card designated when the reservation is requested is used for the online card settlement.

By the way, there is a case in which the number of days in which the accommodation facility is used is greater than or equal to the number of days of the credit period depending on the check-in date and the check-out date specified by the user when the reservation is made. The number of days in which the accommodation facility is used is greater than the number of nights to stay by one. In this case, if the credit re-check is performed on any day on or after the date the number of days of the credit period prior to the settlement date, the accommodation facility reservation server 1 performs the credit re-check on any day on or after the check-in date. However, from the viewpoint of the safety of the settlement of the accommodation fee described above, the accommodation facility reservation server 1 performs the credit re-check by the day prior to the check-in date. In this case, the credit frame secured at the credit re-check is lost before the settlement date. Then, there may be a case in which the accommodation fee cannot be settled by the credit card on the settlement date. Therefore, the accommodation facility reservation server 1 further checks the credit on any day on or after the date the number of days of the credit period prior to the settlement date. The third credit check is referred to as "credit re-re-check".

In the present embodiment, the accommodation facility reservation server 1 performs the credit re-check on the credit frame clear date between the date when the number of days to the check-in date becomes the number of days of the credit period and the day prior to the check-in date. If there is no credit frame clear date from the day when the number of days to the check-in date becomes the number of days of the credit period to the day prior to the check-in date, the accommodation facility reservation server 1 may perform the credit rev-check on another day or need not accept the reservation by the online card settlement. The credit re-check may be performed by the day prior to the check-in date. The accommodation facility reservation server 1 performs the credit re-re-check on the day when the number of days to the settlement date becomes the number of days of the credit period. The credit re-re-check may be performed on any day on or after the day when the number of days to the settlement date becomes the number of days of the credit period.

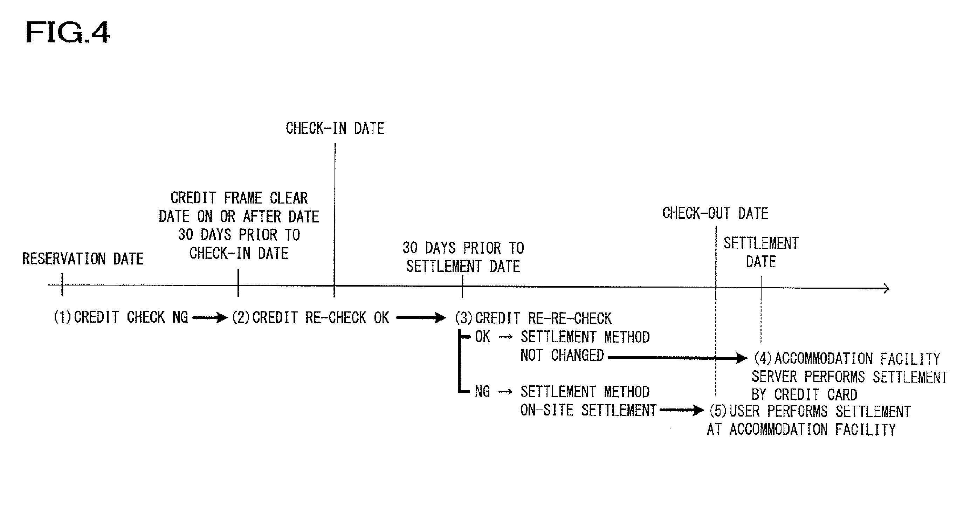

The outline will be described below. Figs. 4 is a diagram showing a flow from the reservation to the settlement in a case in which the number of days in which the accommodation facility is used is greater than or equal to the number of days of the credit period. Figs. 4 shows an example of a case in which the number of days of the credit period is 30.

As shown in Fig. 4, a user specifies the check-in date and the check-out date. As a result, it is assumed that the number of days in which the accommodation facility is used is 30 or more. The user designates the online car settlement and performs an operation to make a reservation. The accommodation facility reservation server 1 performs the credit check (Fig. 4 (1)) in the same manner as in Fig. 2 (1), and even when the credit cannot be confirmed, the accommodation facility reservation server 1 accepts the reservation.

Thereafter, on the credit frame clear date between the day 30 days prior to the check-in date and the day prior to the check-in date, the accommodation facility reservation server 1 performs the credit re-check of the credit card designated when the reservation is made (Fig. 4 (2)). At this time, if the credit can be confirmed, the accommodation facility reservation server 1 determines the settlement method to be the online card settlement.

Thereafter, on and after the check-in date, on the day 30 days prior to the settlement date, the accommodation facility reservation server 1 performs the credit re-re-check of the credit card designated when the reservation is made (Fig. 4 (3)). At this time, if the credit can be confirmed, the accommodation facility reservation server 1 does not change the settlement method. Then, the accommodation facility reservation server 1 performs settlement of the accommodation fee on the following day of the check-out date by the credit card designated when the reservation is made (Fig. 4 (4)). On the other hand, when the credit cannot be confirmed, the accommodation facility reservation server 1 changes the settlement method to the on-site settlement. Thereafter, when the user checks out from the accommodation facility, the user performs settlement of the accommodation fee at the accommodation facility (Fig. 4 (5)).

When the user actually uses the accommodation facility, a fee other than the accommodation fee fixed when the reservation is made may be incurred. For example, the fee is incurred when the user uses a service whose fee is not included in the accommodation fee fixed when the reservation is made and when the user purchases goods in the accommodation facility. The fee that is incurred when the user uses the accommodation facility in addition to the accommodation fee is referred to as "optional fee". When the user uses the online card settlement, the user can perform settlement of the usage fee including the optional fee and the accommodation fee by the online card settlement. Specifically, for example, at the check-out, the provider of the accommodation facility adjusts an account for the optional fee. The provider requests registration of the optional fee by operating the accommodation facility terminal 3. Then, the accommodation facility reservation server 1 performs the credit check on the optional fee. At this time, if the credit can be confirmed, the accommodation facility reservation server 1 performs settlement of the accommodation fee including the optional fee on the following day of the check-out date. On the other hand, if the accommodation facility reservation server 1 cannot confirm the credit, for example, the user performs a procedure for settling the optional fee on site. Also in this case, the accommodation fee is settled by the online card settlement.

### [3. Configuration of accommodation facility reservation server]

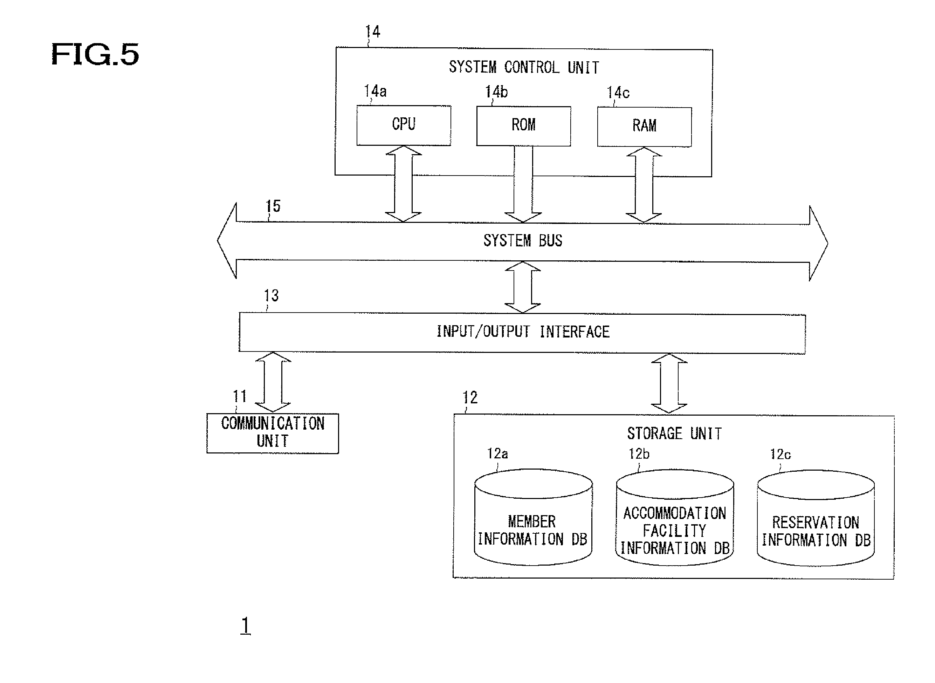

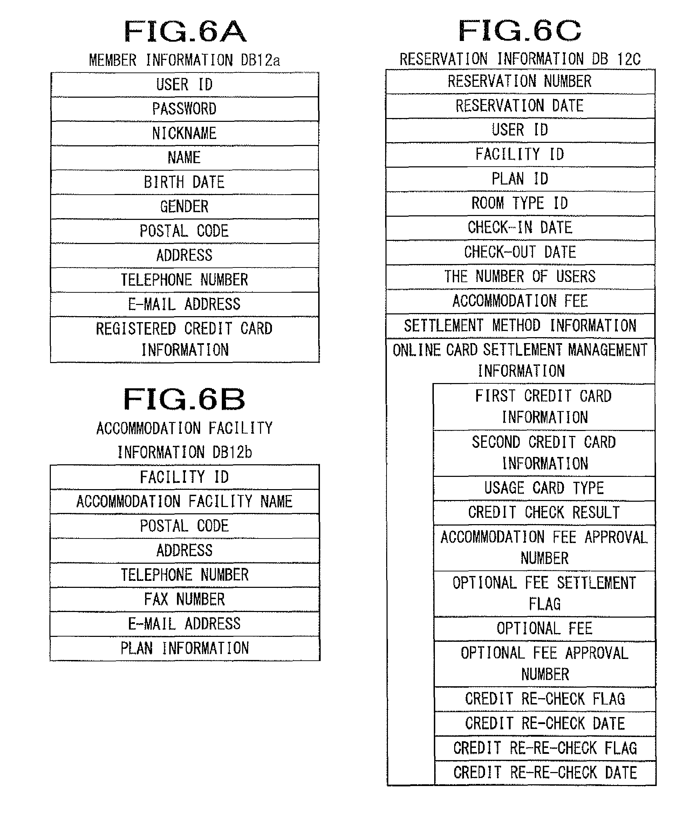

Next, the configuration of the accommodation facility reservation server 1 will be described with reference to Figs. 5 and 6.

Fig. 5 is a block diagram showing an example of a schematic configuration of the accommodation facility reservation server 1 according to the present embodiment. As shown in Fig. 5, the accommodation facility reservation server 1 includes a communication unit 11, a storage unit 12, an input/output interface 13, and a system control unit 14. The system control unit 14 and the input/output interface 13 are connected via a system bus 15.

The communication unit 11 connects to the network NW and controls communication states with the user terminals 4 and the like.

The storage unit 12 includes, for example, a hard disk drive. In the storage unit 12, a member information DB 12a, an accommodation facility information DB 12b, a reservation information DB 12c, and the like are constructed. The "DB" is an abbreviation of database. The storage unit 12 is an example of a storage means of the present invention.

Fig. 6A is a diagram showing an example of information registered in the member information DB 12a. In the member information DB 12a, member information related to users who are registered in the information processing system S as a member is registered. Specifically, in the member information DB 12a, a user ID, a password, a nickname, a name, a birth date, a gender, a postal code, an address, a telephone number, an e-mail address, registered credit card information, and the like are associated with each user and registered. The user ID is identification information of the user. The registered credit card information is card information of a credit card registered by the user. In the registered credit card information, for example, credit card company, a card number, an expiration date, a name of the holder, and the like are set. The user registers the card information in advance, so that the user does not need to input the card information each time when making a reservation.

Fig. 6B is a diagram showing an example of information registered in the accommodation facility information DB 12b. In the accommodation facility information DB 2b, accommodation facility information related to the accommodation facility is registered. Specifically, in the accommodation facility information DB 12b, attributes of an accommodation facility, such as a facility ID, an accommodation facility name, a postal code, an address, a telephone number, a fax number, an e-mail address, and plan information, are associated with each accommodation facility and registered. The facility ID is identification information of the accommodation facility. The plan information is information related to accommodation plans provided by the accommodation facility. The accommodation plans are, for example, accommodation services planed by the provider of the accommodation facility. In the plan information, for example, attributes of the accommodation plan, such as a plan ID, an accommodation plan name, a room type ID, content of the accommodation plan, an explanation of accommodation fee per night, are set for each accommodation plan. The plan ID is identification information of the accommodation plan. The room type ID is identification information indicating a type of room.

Fig. 6C is a diagram showing an example of information registered in the reservation information DB 12c. In the reservation information DB 12c, reservation information related to accepted reservations is registered. Specifically, in the reservation information DB 12c, a reservation number, a reservation date, a user ID, a facility ID, a plan ID, a room type, a check-in date, a check-out date, the number of guests, an accommodation fee, a settlement method information, an online card settlement management information are associated with each reservation and registered. The reservation number is identification information of the reservation. The user ID indicates a user who made the reservation. The facility ID indicates a reserved accommodation facility. The plan ID and the room type ID indicate a reserved accommodation plan and a room type respectively. The accommodation fee is a usage fee fixed when the reservation is made. The accommodation fee is determined according to the accommodation plan, the room type, the number of nights to stay, and the number of guests. The settlement method information is information indicating the settlement method. In the settlement method information, either "on-site settlement " or "online card settlement" is set.

The online card settlement management information is information related to the online card settlement. The online card settlement management information includes first credit card information, second credit card information, a usage card type, a credit check result, an accommodation fee approval number, an optional fee settlement flag, an optional fee, an optional fee approval number, a credit re-check flag, a credit re-check date, a credit re-re-check flag, and a credit re-re-check date. The first credit card information is card information of the first choice credit card designated by the user. The second credit card information is card information of the second choice credit card designated by the user. The usage card type is information indicating the type of the credit card used for the online card settlement. The usage card type is set to either one of "first card" and "second card". The "first card" indicates that the first choice credit card is used. The "second card" indicates that the second choice credit card is used. The credit check result indicates a check result at the latest credit check. When OK is set in the credit check result, it indicates that the credit can be confirmed. When NG is set in the credit check result, it indicates that the credit cannot be confirmed. The accommodation fee approval number is an approval number which is transmitted from the settlement server 2 to the accommodation facility reservation server 1 when the credit of the credit card is approved for the settlement of the accommodation fee. The approval number is identification information of a transaction for which the credit is approved. The optional fee settlement flag is information indicating whether or not the optional fee is settled by the online card settlement. When the optional fee settlement flag is set to ON, it indicates that the optional fee is settled by the online card settlement. When the optional fee settlement t flag is set to OFF, it indicates that the optional fee is not settled by the online card settlement. The optional fee approval number is an approval number which is transmitted from the settlement server 2 to the accommodation facility reservation server 1 when the credit of the credit card is approved for the settlement of the optional fee. The credit re-check flag is information indicating whether or not the credit re-check is necessary. When credit re-check flag is set to ON, it indicates that the credit re-check is necessary. When credit re-check flag is set to OFF, it indicates that the credit re-check is not necessary. The credit re-check date indicates the date on which the credit re-check is performed. The credit re-re-check flag is information indicating whether or not the credit re-re-check is necessary. When the credit re-re-check flag is set to ON, it indicates that the credit re-re-check is necessary. When the credit re-re-check flag is set to OFF, it indicates that the credit re-re-check is not necessary. The credit re-re-check date indicates the date on which the credit re-re-check is performed.

Next, other information stored in the storage unit 12 will be described. In the storage unit 12, various data, such as an HTML (Hyper Text Markup Language) document, an XML (Extensible Markup Language) document, image data, text data, and an electronic document, for displaying a Web page are stored.

Further, in the storage unit 12, various programs, such as an operating system, a WWW (World Wide Web) server program, a DBMS (Database Management System), and an accommodation facility reservation processing program, are stored. The accommodation facility reservation processing program is a program for performing a search for an accommodation facility, a reservation of an accommodation facility, and a credit check and a settlement of an accommodation fee. The accommodation facility reservation processing program is an example of an information processing program of the present invention. For example, the various programs may be acquired from another server apparatus or the like via the network NW or may be recorded in a recording medium such as a DVD (Digital Versatile Disc) and read from the recording medium via a drive apparatus.

The input/output interface 13 performs interface processing between the communication unit 11, the storage unit 12, and the system control unit 14.

The system control unit 14 includes a CPU 14a, a ROM (Read Only Memory) 14b, a RAM (Random Access Memory) 14c, and the like. The CPU 14a reads and executes the various programs, so that the system control unit 14 functions as a reservation means, a check means, an output means, a second check means, a settlement means, and a determination means of the present invention.

The accommodation facility reservation server 1 may include a plurality of server apparatuses. For example, a server apparatus that searches an accommodation facility, a server apparatus that performs processes for reserving an accommodation facility and checking credit, a server apparatus that transmits a Web page according to a request from the user terminal 4, a server apparatus that manages databases, and the like may be connected to each other via LAN or the like.

### [4. Operation of information processing system]

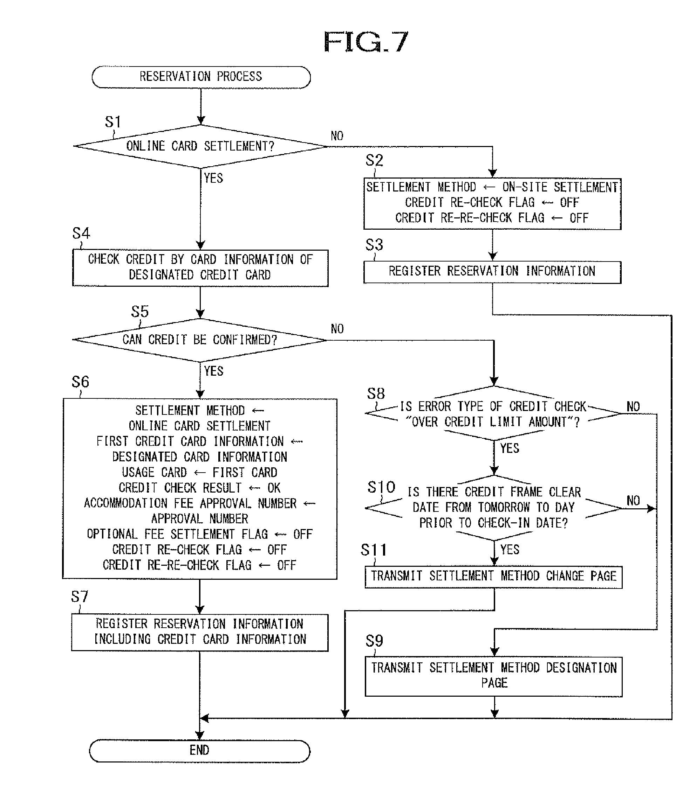

Next, an operation of the information processing system S will be described with reference to Figs. 7 to 12.

Fig. 7 is a flowchart showing a process example of the reservation process of the system control unit 14 in the accommodation facility reservation server 1 according to the present embodiment.

For example, a user searches for an accommodation facility on an accommodation facility site and selects desired accommodation facility, accommodation plan, and room type. Next, the user specifies a check-in date, a check-out date, and the number of guests. Then, a settlement method designation page is displayed on a screen of the user terminal 4. The settlement method designation page is a Web page for designating a settlement method. Here, if the user selects the online card settlement as the settlement method, the user inputs card information of a credit card used for the settlement. At this time, the user can designate a credit card whose information is registered in the member information. In this case, the user does not input the card information. The user performs necessary selection operations and input operations, and then selects a button to request a reservation. Then, the user terminal 4 transmits a reservation request to the accommodation facility reservation server 1. The reservation request includes a user ID, a facility ID, a plan ID, a room ID which are selected by the user, the check-in date, the check-out date, and the number of guests. The facility ID, the plan ID, and the room ID correspond to the accommodation facility, the accommodation plan, and the room type, respectively, which are selected by the user. The reservation request also includes information indicating whether or not a credit card whose information is registered in the member information is used and the card information inputted by the user. The reservation process is started when the accommodation facility reservation server 1 receives the reservation request.

As shown in Fig. 7, the system control unit 14 determines whether or not the settlement method selected by the user is the online card settlement (step S1). At this time, if the system control unit 14 determines that the settlement method is not the online card settlement (step S1: NO), the system control unit 14 sets the settlement method information to "on-site settlement". The system control unit 14 sets the credit re-check flag and the credit re-re-check flag to OFF (step S2). Next, the system control unit 14 registers reservation information (step S3). Specifically, the system control unit 14 generates a new reservation number. Next, the system control unit 14 generates reservation information including the reservation number, the information included in the reservation request, the settlement method information where the settlement method is set, the credit re-check flag, the credit re-re-check flag, and the like. Next, the system control unit 14 registers the generated reservation information in the reservation information DB 12c. When completing the process of step S3, the system control unit 14 ends the reservation process.

On the other hand, if the system control unit 14 determines that the settlement method is the online card settlement (step S1: YES), the system control unit 14 checks the credit on the basis of the card information of the credit card designated by the user (step S4). Specifically, the system control unit 14 calculates the accommodation fee based on the facility ID, the plan ID, the room type ID, and the number of guests included in the reservation request. Further, the system control unit 14 acquires the card information of the credit card designated by the user. When the user inputs card information, the system control unit 14 acquires the card information from the reservation information request. On the other hand, when the user designates a registered credit card, the system control unit 14 searches for member information, corresponding to the user ID of the user who requests the reservation, from the member information DB 12a. Then, the system control unit 14 acquires registered credit card information from the searched member information. When the system control unit 14 acquires the card information, the system control unit 14 transmits a credit check request to the settlement server 2. The credit check request includes the acquired card information and a used amount of money, and the like. The system control unit 14 sets the used amount of money to the accommodation fee.

When the settlement server 2 receives the credit check request, the settlement server 2 determines whether or not to approve the credit. Specifically, the settlement server 2 determines whether or not the card information included in the credit check request is card information of a valid credit card. The settlement server 2 also determines whether or not the validity period of the credit card expires on the basis of the card information. The settlement server 2 also determines whether or not the current available credit of the credit card is greater than or equal to the used amount of money included in the credit check request.

If the card information is card information of a valid credit card, the validity period does not expire, and the available credit is greater than or equal to the used amount of money, the settlement server 2 approves the credit. In this case, the settlement server 2 issues a new approval number. Further, the settlement server 2 secures a credit frame corresponding to the accommodation fee. For example, the settlement server 2 associates the approval number, the accommodation fee, the card information, and the like with each other and stores these data in a database included in the settlement server 2. The settlement server 2 updates the available credit corresponding to the card information. Then, the settlement server 2 transmits a credit check response including the approval number to the accommodation facility reservation server 1.

On the other hand, if the card information is not card information of a valid credit card, the validity period expires, or the available credit is smaller than the used amount of money, the settlement server 2 does not approve the credit. In this case, the settlement server 2 transmits a credit check response including an error type to the accommodation facility reservation server 1. In this case, the credit check response includes no approval number. The error type is information indicating a reason why the credit cannot be approved. Examples of the error type include "invalid card", "expired card", "over credit limit amount", and the like. The "invalid card" indicates that the card information is invalid. The "expired card" indicates that the validity period of the credit card has expired. The "over credit limit amount" indicates that the used amount of money exceeds the available credit.

When the system control unit 14 receives the credit check response, the system control unit 14 determines whether or not the credit can be confirmed (step S5). At this time, if the system control unit 14 receives the credit check response including an approval number from the settlement server 2, the system control unit 14 determines that the credit can be confirmed (step S5: YES). In this case, the system control unit 14 performs setting of the online card settlement management information (step S6). Specifically, the system control unit 14 sets the settlement method information to the "online card settlement". The system control unit 14 sets the first credit card information to the card information acquired in step S4. The system control unit 14 sets the usage card type to the "first card". The system control unit 14 sets the credit check result to OK. The system control unit 14 sets the accommodation fee approval number to the approval number included in the credit check response. The system control unit 14 sets the optional fee settlement flag to OFF. The system control unit 14 sets the credit re-check flag and the credit re-re-check flag to OFF.

Next, the system control unit 14 registers the reservation information including the card information of the credit card designated by the user (step S7). Specifically, the system control unit 14 generates reservation information including the new reservation number, the information included in the reservation request, the set online card settlement management information, and the like. Next, the system control unit 14 registers the generated reservation information in the reservation information DB 12c. When completing the process of step S7, the system control unit 14 ends the reservation process.

On the other hand, if the system control unit 14 receives the credit check response including no approval number, the system control unit 14 determines that the credit cannot be confirmed (step S5: NO). In this case, the system control unit 14 acquires the error type included in the credit check response received from the settlement server 2. Then, the system control unit 14 as the determination means determines whether or not the error type is the "over credit limit amount" (step S8). At this time, if the system control unit 14 determines that the error type is not the "over credit limit amount" (step S8: NO), the system control unit 14 transmits the settlement method designation page to the user terminal 4 that is the transmission source of the reservation request (step S9). When completing the process of step S9, the system control unit 14 ends the reservation process. The user designates the settlement method again on the settlement method designation page. Then, when the user selects a button to request a reservation, the user terminal 4 transmits a reservation request to the accommodation facility reservation server 1.

On the other hand, if the system control unit 14 determines that the error type is the "over credit limit amount" (step S8: YES), the system control unit 14 determines whether or not there is the credit frame clear date between tomorrow and the day prior to the check-in date included in the reservation request (step S10). The credit frame clear date may be different for each credit card company. In this case, the system control unit 14 specifies the credit frame clear date on the basis of the information of the credit card company included in the card information acquired in step S4. At this time, if the system control unit 14 determines that there is no credit frame clear date (step S10: NO), the system control unit 14 proceeds to step S9. In other words, if there is no credit frame clear date, the system control unit 14 does not accept the reservation by the online card settlement that uses the first choice credit card.

On the other hand, if the system control unit 14 determines that there is the credit frame clear date (step S10: YES), the system control unit 14 transmits the settlement method change page to the user terminal 4 that is the transmission source of the reservation request (step S11). Next, the system control unit 14 temporarily stores the information included in the reservation request and the card information acquired in step S4 into the storage unit 12 in association with the user ID of the user who requests the reservation. When completing this process, the system control unit 14 ends the reservation process.

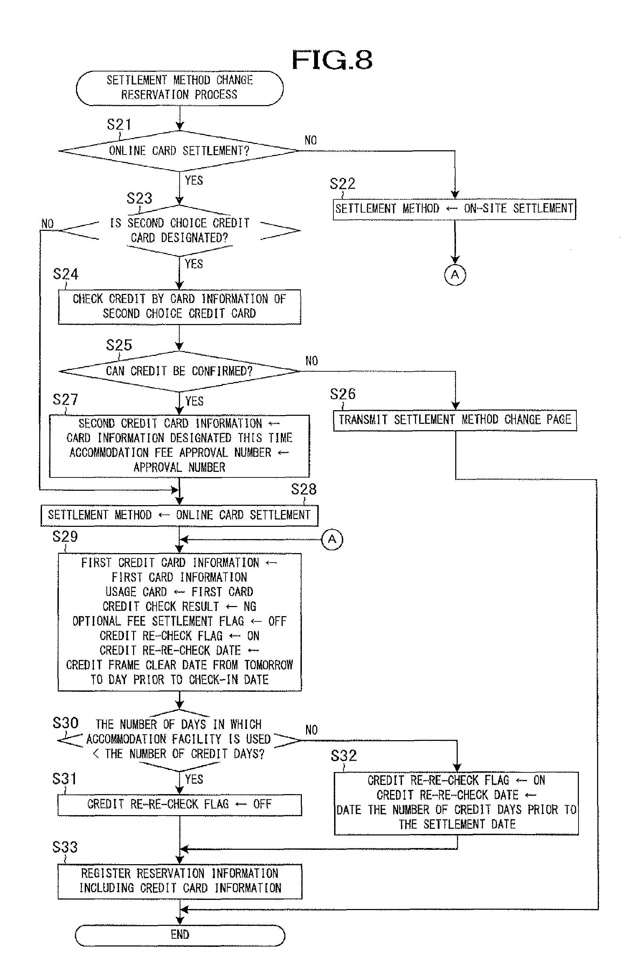

Fig. 8 is a flowchart showing a process example of the settlement method change reservation process of the system control unit 14 in the accommodation facility reservation server 1 according to the present embodiment.

The user terminal 4 displays the settlement method change page received from the accommodation facility reservation server 1. Here, the user selects whether or not to designate the settlement method and the second choice credit card. The user inputs the card information of the second choice credit card as needed. The user terminal 4 selects the decision button 160. Then, the user terminal 4 transmits a settlement method change reservation request to the accommodation facility reservation server 1. The settlement method change reservation request includes the user ID, the settlement method selected by the user, and information indicating whether or not to designate the second choice credit card. The settlement method change reservation request also includes information indicating whether or not to use a credit card whose information is registered in the member information and the card information inputted by the user. The settlement method change reservation process is started when the accommodation facility reservation server 1 receives the settlement method change reservation request.

As shown in Fig. 8, the system control unit 14 determines whether or not the settlement method selected by the user is the online card settlement (step S21). At this time, if the system control unit 14 determines that the settlement method is not the online card settlement (step S21: NO), the system control unit 14 changes the settlement method information to the "on-site settlement" (step S22). Next, the system control unit 14 proceeds to step S29.

On the other hand, if the system control unit 14 determines that the settlement method is the online card settlement (step S21: YES), the system control unit 14 determines whether or not the second choice credit card is designated (step S23). At this time, if the system control unit 14 determines that the second choice credit card is not designated (step S23: NO), the system control unit 14 proceeds to step S28. On the other hand, if the system control unit 14 determines that the second choice credit card is designated (step S23: YES), the system control unit 14 checks the credit based on the card information of the second choice credit card (step S24). The content of this process is basically the same as that of the process in step S4 in the reservation process shown in Fig. 7. However, the system control unit 14 acquires the card information of the second choice credit card on the basis of the settlement method change request. Then, the system control unit 14 puts the acquired card information into the credit check request.

Next, the system control unit 14 determines whether or not the credit of the second choice credit card can be confirmed (step S25). At this time, if the system control unit 1.4 determines that the credit cannot be confirmed (step S25: NO), the system control unit 14 transmits the settlement method designation page to the user terminal 4 that is the transmission source of the reservation request (step S26). When completing the process of step S26, the system control unit 14 ends the settlement method change reservation process. On the other hand, if the system control unit 14 determines that the credit can be confirmed (step S25: YES), the system control unit 14 sets the second credit card information to the card information acquired in step S24. Also, the system control unit 14 sets the accommodation fee approval number to the approval number included in the credit check response received in step S24 (step S27). Next, the system control unit 14 proceeds to step S28.

In step S28, the system control unit 14 sets the settlement method information to the "online card settlement". Next, the system control unit 14 performs main setting of the online card settlement management information (step S29). Specifically, the system control unit 14 sets the first credit card information to the card information stored in the storage unit 12 in association with the user ID of the user who requests the reservation. The system control unit 14 sets the usage card type to the "first card". The system control unit 14 sets the credit check result to NG. The system control unit 14 sets the optional fee settlement flag to OFF. The system control unit 14 sets the credit re-check flag to ON. The system control unit 14 sets the credit re-check date to the credit frame clear date included between tomorrow and the day prior to the check-in date. At this time, when there are a plurality of credit frame clear dates, for example, the system control unit 14 may set the credit frame clear date closest to the check-in date as the credit re-check date. The reason of this is to be able to perform settlement based on the credit frame secured at the credit re-check.

Next, on the basis of the check-in date and the check-out date stored in the storage unit 12 in association with the user ID of the user who requests the reservation, the system control unit 14 calculates the number of days in which the accommodation facility is used. Then, the system control unit 14 determines whether or not the number of days in which the accommodation facility is used is smaller than the number of credit days (step S30). At this time, if the system control unit 14 determines that the number of days in which the accommodation facility is used is smaller than the number of credit days (step S30: YES), the system control unit 14 sets the credit re-re-check flag to OFF (step S31). Next, the system control unit 14 proceeds to step S33.

On the other hand, if the system control unit 14 determines that the number of days in which the accommodation facility is used is greater than or equal to the number of credit days (step S30: NO), the system control unit 14 sets the credit re-re-check flag to ON. Also, the system control unit 14 sets the settlement date to the following day of the check-out date. Then, the system control unit 14 sets the credit re-re-check date to the date the number of credit days prior to the settlement date (step S32). Next, the system control unit 14 proceeds to step S33.

In step S33, the system control unit 14 as the reservation means registers the reservation information including the card information of the credit card designated by the user. Specifically, the system control unit 14 generates the reservation information including the new reservation number, the information stored in the storage unit 12 in association with the user ID of the user who requests the reservation, the settlement method information where the settlement method is set, the first credit card information, the second credit card information, the usage card type, the credit check result, the accommodation fee approval number, the optional fee settlement flag, the credit re-check flag, the credit re-check date, the credit re-re-check flag, the credit re-re-check date, and the like. Next, the system control unit 14 registers the generated reservation information in the reservation information DB 12c. The system control unit 14 accepts the requested reservation by registering the reservation information. When completing the process of step S33, the system control unit 14 ends the reservation process.

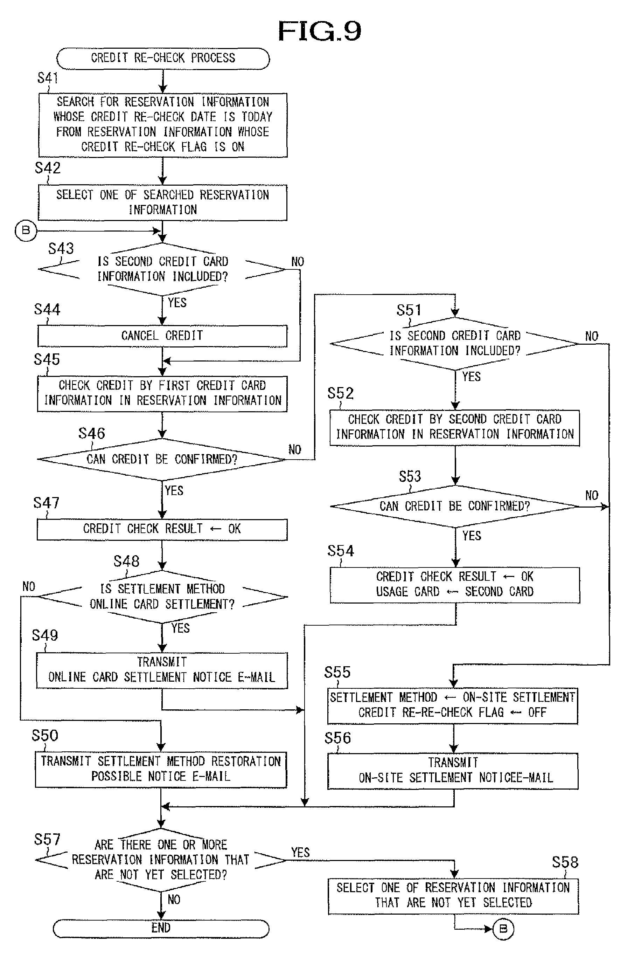

Fig. 9 is a flowchart showing a process example of a credit re-check process of the system control unit 14 in the accommodation facility reservation server 1 according to the present embodiment. The accommodation facility reservation server 1 performs the credit re-check process, a credit re-re-check process described later, and a settlement process described later once a day. The accommodation facility reservation server 1 may continuously performs the credit re-check process, the credit re-re-check process, and the settlement process.

As shown in Fig. 9, the system control unit 14 searches for one or more pieces of reservation information whose credit re-check date is today among one or more pieces of reservation information whose credit re-check flag is set to ON from the reservation information DB 12c (step S41). Next, the system control unit 14 selects one of the searched pieces of reservation information (step S42). Next, the system control unit 14 determines whether or not the second credit card information is included in the selected reservation information (step S43). At this time, if the system control unit 14 determines that the second credit card information is not included (step S43: NO), the system control unit 14 proceeds to step S45. On the other hand, if the system control unit 14 determines that the second credit card information is included (step S43: YES), the system control unit 14 cancels the credit of the second choice credit card secured by the credit check when the reservation that corresponds to the selected reservation information is made (stepS44). The reason why this process is performed is to prevent a plurality of credit frames from being secured for one reservation. Specifically, the system control unit 14 acquires the accommodation fee approval number from the selected reservation information. Next, the system control unit 14 transmits a credit cancel request including the acquired accommodation fee approval number as the approval number to the settlement server 2. When the settlement server 2 receives the credit cancel request, the settlement server 2 cancels the credit frame corresponding to the approval number included in the credit cancel request. However, if the credit period from the date when the previous credit check was performed expires, the system control unit 14 does not need to cancel the credit. When completing the process of step S45, the system control unit 14 proceeds to step S45.

In step S45, the system control unit 14 as the check means checks the credit of the first choice credit card on the basis of the first credit card information included in the selected reservation information. The content of this process is basically the same as that of the process in step S4 in the reservation process shown in Fig. 7. However, the system control unit 14 puts the first credit card information included in the selected reservation information into the credit check request.

Next, the system control unit 14 determines whether or not the credit can be confirmed (step S46). At this time, if the system control unit 14 determines that the credit cannot be confirmed (step S46: NO), the system control unit 14 proceeds to step S51. On the other hand, if the system control unit 14 determines that the credit can be confirmed (step S46: YES), the system control unit 14 overwrites the accommodation fee approval number included in the selected reservation information with the approval number included in the credit check response received from the settlement server 2 in step S45. Next, the system control unit 14 sets the credit check result included in the selected reservation information to OK (step S47).

Next, the system control unit 14 determines whether or not the settlement method information included in the selected reservation information is the "online card settlement" (step S48). At this time, if the system control unit 14 determines that the settlement method information is the "online card settlement" (step S48: YES), the system control unit 14 as the output means transmits the online card settlement notice e-mail (step S49). Specifically, the system control unit 14 searches for member information corresponding to the user ID included in the selected reservation information from the member information DB 12a. Next, the system control unit 14 acquires an e-mail address from the searched member information. Next, the system control unit 14 generates the online card settlement notice e-mail. At this time, the system control unit 14 sets the destination of the online card settlement notice e-mail to the acquired e-mail address. Further, the system control unit 14 puts a sentence in the body text of the online card settlement notice e-mail. The sentence indicates that the settlement method is not changed from the online card settlement to the on-site settlement because the credit is confirmed by the first choice credit card. Then, the system control unit 14 transmits the generated online card settlement notice e-mail. When completing the process of step S49, the system control unit 14 proceeds to step S57.

On the other hand, if the system control unit 14 determines that the settlement method information is not the "online card settlement" (step S48: NO), the system control unit 14 as the output means transmits the settlement method restoration possible notice e-mail (step S50). Specifically, the system control unit 14 generates the settlement method restoration possible notice e-mail. At this time, the system control unit 14 sets the destination address in the same manner as in step S49. Further, the system control unit 14 puts a sentence in the body text of the settlement method restoration possible notice e-mail. The sentence indicates that the settlement method can be restored from the on-site settlement to the online card settlement by the first choice credit card because the credit is confirmed by the first choice credit card. The system control unit 14 puts the URL of the settlement method restoration approval page in the body text of the settlement method restoration possible notice e-mail. The system control unit 14 adds the reservation number included in the selected reservation information to the URL of the settlement method restoration approval page. Then, the system control unit 14 transmits the generated settlement method restoration possible notice e-mail. When completing the process of step S50, the system control unit 14 proceeds to step S57.

When the user who receives the settlement method restoration possible notice e-mail selects the URL described in the body text, the user terminal 4 transmits a request including the URL to the accommodation facility reservation server 1, and accordingly the system control unit 14 transmits the settlement method restoration approval page to the user terminal 4. Here, if the user selects the button for approving, the system control unit 14 searches for reservation information corresponding to the reservation number added to the URL included in the received request from the reservation information DB 12c. Next, the system control unit 14 changes the settlement method information included in the searched reservation information to the "online card settlement ".

In step S51, the system control unit 14 determines whether or not the second credit card information is included in the selected reservation information. At this time, if the system control unit 14 determines that the second credit card information is not included (step S51: NO), the system control unit 14 proceeds to step S55. On the other hand, if the system control unit 14 determines that the second credit card information is included (step S51: YES), the system control unit 14 checks the credit of the second choice credit card on the basis of the second credit card information included in the selected reservation information (step S52). The content of this process is basically the same as that of the process of step S45. However, the system control unit 14 puts the second credit card information included in the selected reservation information into the credit check request.

Next, the system control unit 14 determines whether or not the credit can be confirmed (step S53). At this time, if the system control unit 14 determines that the credit cannot be confirmed (step S53: NO), the system control unit 14 proceeds to step S55. On the other hand, if the system control unit 14 determines that the credit can be confirmed (step S53: YES), the system control unit 14 overwrites the accommodation fee approval number included in the selected reservation information with the approval number included in the credit check response received from the settlement server 2 in step S52. Next, the system control unit 14 sets the credit check result included in the selected reservation information to OK. Further, the system control unit 14 sets the usage card type included in the selected reservation information to the "second card" (step S54). Next, the system control unit 14 proceeds to step S57.

In step S55, the system control unit 14 changes the settlement method information included in the selected reservation information to the "on-site settlement". Further, the system control unit 14 sets the credit re-re-check flag included in the selected reservation information to OFF.

Next, the system control unit 14 as the output means transmits the on-site settlement notice e-mail (step S56). Specifically, the system control unit 14 generates the on-site settlement notice e-mail. At this time, the system control unit 14 sets the destination address in the same manner as in step S49. Further, the system control unit 14 puts a sentence indicating that the settlement method has been changed from the online card settlement to the on-site settlement into the body text of the on-site settlement notice e-mail. Then, the system control unit 14 transmits the generated on-site settlement notice e-mail. When completing the process of step S56, the system control unit 14 proceeds to step S57. The system control unit 14 may also transmit the on-site settlement notice e-mail to the provider of the reserved accommodation facility.

In step S57, the system control unit 14 determines whether or not there are one or more pieces of reservation information that is not yet selected in the reservation information searched in step S41. At this time, if the system control unit 14 determines that there are one or more pieces of reservation information that are not yet selected (step S57: YES), the system control unit 14 selects one of the pieces of reservation information that are not yet selected (step S58). Next, the system control unit 14 proceeds to step S43. The system control unit 14 repeats the processes of steps S43 to S58, so that the system control unit 14 performs the credit re-check for each reservation where the credit re-check is required today. When the system control unit 14 determines that all the pieces of reservation information are selected (step S57: NO), the system control unit 14 completes the credit re-check process.

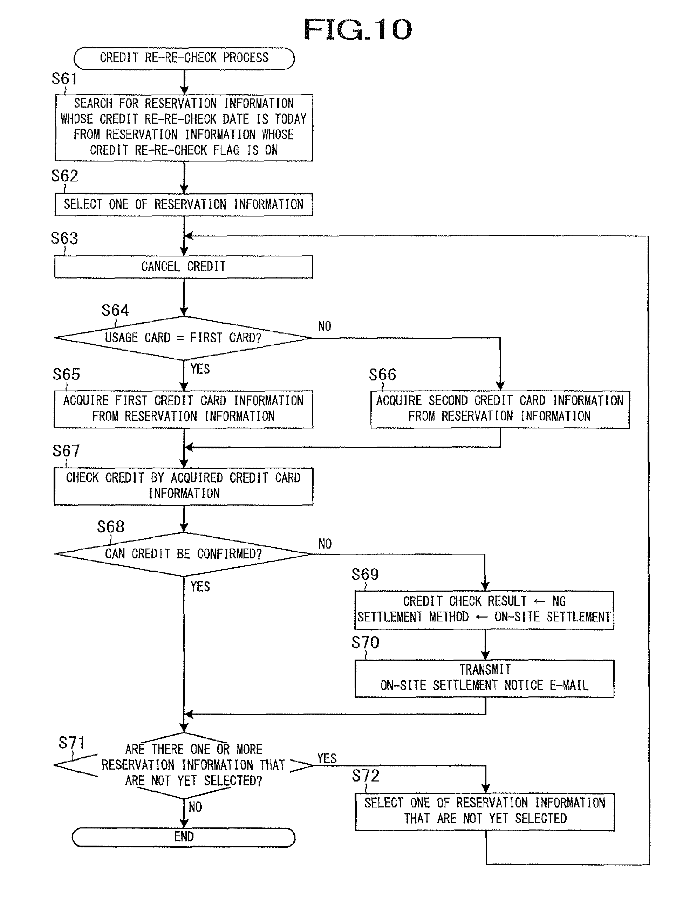

Fig. 10 is a flowchart showing a process example of the credit re-re-check process of the system control unit 14 in the accommodation facility reservation server 1 according to the present embodiment.

As shown in Fig. 10, the system control unit 14 searches for pieces of reservation information whose credit re-re-check date is today among pieces of reservation information whose credit re-re-check flag is set to ON from the reservation information DB 12c (step S61). Next, the system control unit 14 selects one of the searched pieces of reservation information (step S62). Next, the system control unit 14 cancels the credit secured by the credit re-check for the reservation corresponding to the selected reservation information (step S63). The content of this process is the same as that of the process of step S44 in the credit re-check process shown in Fig. 9.

Next, the system control unit 14 determines whether or not the usage card type included in the selected reservation information is the "first card" (step S64). At this time, if the system control unit 14 determines that the usage card type is the "first card" (step S64: YES), the system control unit 14 acquires the first credit card information included in the selected reservation information (step S65). Next, the system control unit 14 proceeds to step S67. On the other hand, if the system control unit 14 determines that the usage card type is not the "first card" (step S64: NO), the system control unit 14 acquires the second credit card information included in the selected reservation information (step S66). Next, the system control unit 14 proceeds to step S67.

In step S67, the system control unit 14 checks the credit based on the credit card information acquired in step S65 or S66. The content of this process is the same as that of the process of step S4 in the reservation process shown in Fig. 7. Next, the system control unit 14 determines whether or not the credit can be confirmed (step S68). At this time, if the system control unit 14 determines that the credit can be confirmed (step S68: YES), the system control unit 14 overwrites the accommodation fee approval number included in the selected reservation information with the approval number included in the credit check response received from the settlement server 2 in step S67. Next, the system control unit 14 proceeds to step S71.

On the other hand, if the system control unit 14 determines that the credit cannot be confirmed (step S68: NO), the system control unit 14 sets the credit check result included in the selected reservation information to NG. Further, the system control unit 14 changes the settlement method information included in the selected reservation information to the "on-site settlement" (step S69). Next, the system control unit 14 transmits the on-site settlement notice e-mail (step S70). The content of this process is the same as that of the process of step S56 in the credit re-check process shown in Fig. 9. When completing the process of step S70, the system control unit 14 proceeds to step S71.

In step S71, the system control unit 14 determines whether or not there are one or more pieces of reservation information that is not yet selected in the reservation information searched in step S61. At this time, if the system control unit 14 determines that there are one or more pieces of reservation information that are not yet selected (step S71: YES), the system control unit 14 selects one of the pieces of reservation information that are not yet selected (step S72). Next, the system control unit 14 proceeds to step S63. The system control unit 14 repeats the processes of steps S63 to S72, so that the system control unit 14 performs the credit re-re-check for each reservation where the credit re-re-check is required today. When the system control unit 14 determines that all the pieces of reservation information are selected (step S71: NO), the system control unit 14 completes the credit re-re-check process.

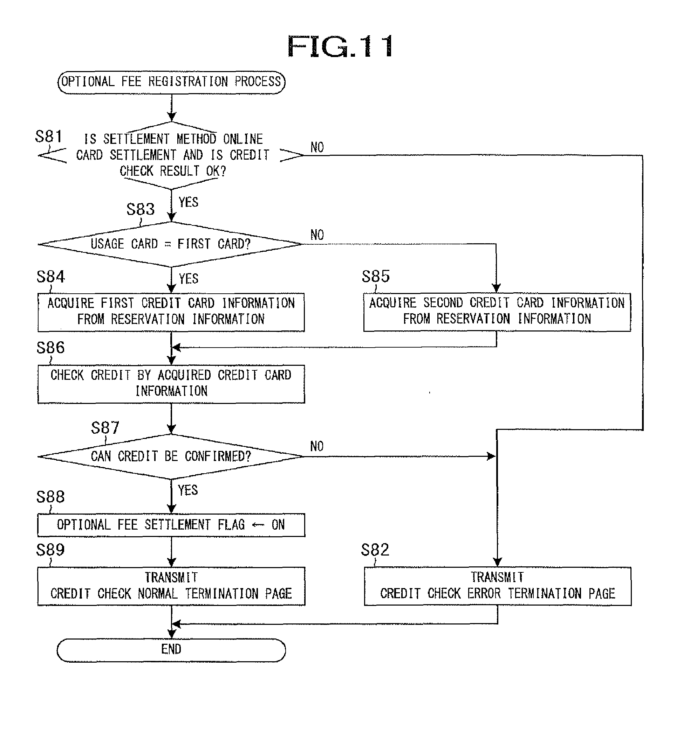

Fig. 11 is a flowchart showing a process example of an optional fee registration process of the system control unit 14 in the accommodation facility reservation server 1 according to the present embodiment.

When an optional fee is incurred, the provider of the accommodation facility operates the accommodation facility terminal 3 to register the optional fee. At this time, the provider inputs the optional fee, the reservation number, and the like. Then, the accommodation facility terminal 3 transmits an optional fee registration request to the accommodation facility reservation server 1. The optional fee registration process is started when the accommodation facility reservation server 1 receives the optional fee registration request.

As shown in Fig. 11, the system control unit 14 searches for reservation information corresponding to the reservation number included in the optional fee registration request from the reservation information DB 12c. Next, the system control unit 14 determines whether or not the settlement method information included in the searched reservation information is set to "online card settlement" and the credit check result included in the searched reservation information is set to OK (step S81).

At this time, if the system control unit 14 determines that the settlement method information is not set to "online card settlement" or the credit check result is not set to OK (step S81: NO), the system control unit 14 transmits a credit check error termination page to the accommodation facility terminal 3 that is the transmission source of the optional fee registration request (step S82). The credit check error termination page is a Web page that displays a message indicating that the credit cannot be confirmed for the optional fee. When completing the process of step S82, the system control unit 14 completes the optional fee registration process.

On the other hand, if the system control unit 14 determines that the settlement method information is set to the "online card settlement" and the credit check result is set to OK (step S81: YES), the system control unit 14 determines whether or not the usage card type included in the searched reservation information is the "first card" (step S83). At this time, if the system control unit 14 determines that the usage card type is the first card" (step S83: YES), the system control unit 14 acquires the first credit card information included in the searched reservation information (step S84). Next, the system control unit 14 proceeds to step S86. On the other hand, if the system control unit 14 determines that the usage card type is not the "first card" (step S83: NO), the system control unit 14 acquires the second credit card information included in the searched reservation information (step S85). Next, the system control unit 14 proceeds to step S86.

In step S86, the system control unit 14 checks the credit for settling the optional fee on the basis of the credit card information acquired in step S84 or S85. The content of this process is basically the same as that of the process in step S4 in the reservation process shown in Fig. 7. However, the system control unit 14 puts the optional fee instead of the accommodation fee in the credit check request.

Next, the system control unit 14 determines whether or not the credit can be confirmed (step S87). At this time, if the system control unit 14 determines that the credit cannot be confirmed (step S87: NO), the system control unit 14 proceeds to step S82. On the other hand, if the system control unit 14 determines that the credit can be confirmed (step S87: YES), the system control unit 14 puts the approval number included in the credit check response received from the settlement server 2 in step S86 into the searched reservation information as the optional fee approval number. Next, the system control unit 14 sets the optional fee settlement flag included in the searched reservation information to ON. Further, the system control unit 14 puts the optional fee included in the optional fee registration request into the searched reservation information (step S85). Next, the system control unit 14 transmits a credit check normal termination page to the accommodation facility terminal 3 which is the transmission source of the optional fee registration request (step S86). The credit check normal termination page is a Web page that displays a message indicating that the credit can be confirmed for the optional fee. When completing the process of step S89 the system control unit 14 ends the optional fee registration process.

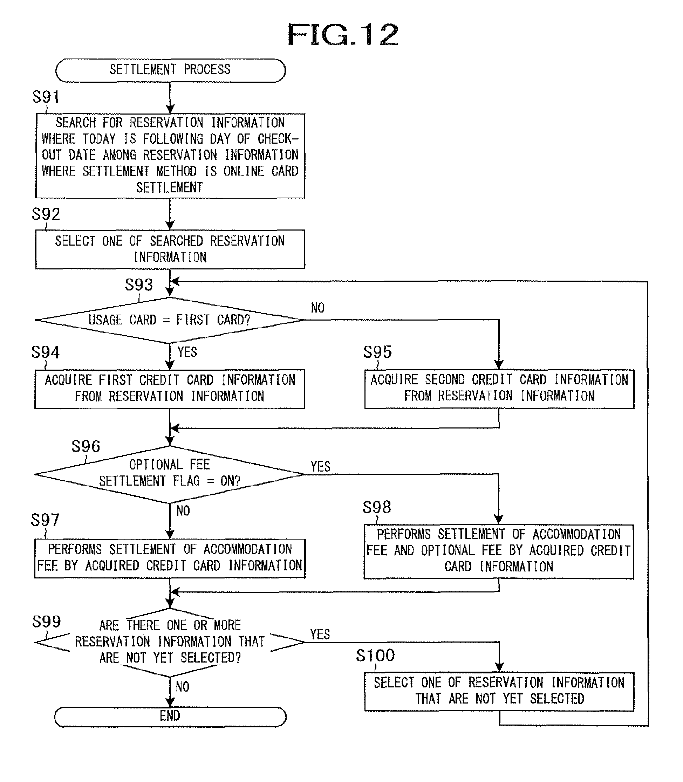

Fig. 12 is a flowchart showing a process example of the settlement process of the system control unit 14 in the accommodation facility reservation server 1 according to the present embodiment.

As shown in Fig. 12, the system control unit 14 searches for one or more pieces of reservation information where the following day of the check-out date is today among one or more pieces of reservation information where the settlement method information is set to "online card settlement" from the reservation information DB 12c (step S91). Next, the system control unit 14 selects one of the searched pieces of reservation information (step S92). Next, the system control unit 14 determines whether or not the usage card type included in the selected reservation information is the "first card" (step S93). At this time, if the system control unit 14 determines that the usage card type is the "first card" (step S93: YES), the system control unit 14 acquires the first credit card information included in the searched reservation information (step S94). Next, the system control unit 14 proceeds to step S96. On the other hand, if the system control unit 14 determines that the usage card type is not the first card" (step S93: NO), the system control unit 14 acquires the second credit card information included in the searched reservation information (step S95). Next, the system control unit 14 proceeds to step S96.

In step S96, the system control unit 14 determines whether or not an option settlement flag included in the selected reservation information is set to ON. At this time, if the system control unit 14 determines that the option settlement flag is not set to ON (step S96: NO), the system control unit 14 performs settlement of the accommodation fee included in the selected reservation information on the basis of the acquired credit card information (step S97). Specifically, the system control unit 14 transmits a settlement request to the settlement server 2. The settlement request includes the acquired credit card information, the used amount of money, the approval number, and the like. The system control unit 14 puts the accommodation fee and the accommodation fee approval number included into the selected reservation information as the used amount of money and the approval number. When the settlement server 2 receives the settlement request, the settlement server 2 performs a process to fix a usage fee to be withdrawn from the bank account of the user corresponding to the approval number included in the settlement request by the accommodation fee included in the settlement request. When completing the process of step S94, the system control unit 14 proceeds to step S99.

On the other hand, if the system control unit 14 determines that the option settlement flag is set to ON (step S96: YES), the system control unit 14 as the settlement means performs settlement of the usage fee including the accommodation fee and the optional fee included in the selected reservation information on the basis of the acquired credit card information (step S98). Specifically, the system control unit 14 performs settlement of the accommodation fee in the same manner as in step S97. Further, the system control unit 14 transmits a settlement request, in which the optional fee and the optional fee approval number included in the selected reservation information are set, to the settlement server 2. Thereby, the system control unit 14 performs settlement of the optional fee. When completing the process of step S98, the system control unit 14 proceeds to step S99.

In step S99, the system control unit 14 determines whether or not there is reservation information that is not yet selected in the reservation information searched in step S91. At this time, if the system control unit 14 determines that there are one or more pieces of reservation information that are not yet selected (step S96: YES), the system control unit 14 selects one of the pieces reservation information that are not yet selected (step S100). Next, the system control unit 14 proceeds to step S93. The system control unit 14 repeats the processes of steps S93 to S100, so that the system control unit 14 performs settlement of the usage fee for each reservation required to perform the payment today. When the system control unit 14 determines that all the pieces of reservation information are selected (step S99: NO), the system control unit 14 completes the settlement process.

As described above, according to the present embodiment, when the system control unit 14 in the accommodation facility reservation server 1 cannot confirm the validity of the designated credit card for the request of reservation where the online card settlement is designated, the system control unit 14 accepts the reservation and stores the credit card information of the designated credit card in the storage unit 12. After the reservation is accepted, the system control unit 14 checks the validity of the designated credit card on the basis of the information stored in the storage unit 12. If the validity is confirmed, the system control unit 14 transmits the online card settlement notice e-mail or the settlement method restoration possible notice e-mail each indicating that the settlement by the designated credit card is used as the settlement method. If the validity is not confirmed, the system control unit 14 transmits the on-site settlement notice e-mail which indicates that a method different from the settlement by the designated credit card is used as the settlement method. Therefore, even if there is no credit for settling the usage fee by the credit card which the user wants to use when the reservation is requested, if the credit is restored thereafter, it is possible to set the settlement method to the settlement by the credit card which the user wants to use. Therefore, the accommodation facility reservation server 1 can accept the reservation which will be able to be settled by the credit card which the user wants to use.

When the number of days of use of the accommodation facility where the reservation is accepted is greater than or equal to the number of credit days, the system control unit 14 checks the validity of the designated credit card by the day prior to the check-in date of the accommodation facility where the reservation is accepted. Therefore, for a reservation where, if the validity of the credit card is checked so that the settlement is performed within the credit period, the check date is on or after the check-in date, it is possible to check the validity before the check-in date. Therefore, the provider of the accommodation facility can start providing the accommodation facility while it is secured that the user can settle the usage fee by the credit card.

When the number of days of use of the accommodation facility where the reservation is accepted is greater than or equal to the number of credit days, after the validity can be confirmed by the credit re-check, the system control unit 14 checks the validity of the designated credit card based on the first credit card information stored in the storage unit 12 on or after the date on which the number of days to the settlement date becomes the number of credit days, and if the validity cannot be confirmed, the system control unit 14 outputs the on-site settlement notice e-mail. Therefore, it is possible to improve the safety of the settlement of the usage fee.

When an optional fee is incurred by use of the reserved accommodation facility in addition to the accommodation fee for which the online card settlement can be confirmed to be valid by the credit re-check, the system control unit 14 performs settlement of the usage fee including the accommodation fee and the optional fee that has been incurred by using the designated credit card on the basis of the credit card information stored in the storage unit 12. Therefore, if a new fee is incurred when the user uses the accommodation facility, the system control unit 14 can perform settlement by the credit card which the user wants to use without performing a procedure of the settlement.

If the system control unit 14 cannot confirm that the credit card designated for the request of the reservation is valid, the system control unit 14 determines whether or not the error type is the "over credit limit amount", and if the system control unit 14 determines that the error type is the "over credit limit amount", the system control unit 14 accepts the reservation and stores the information of the designated credit card in the storage unit 12. Therefore, it is possible to prevent the accommodation facility reservation server 1 from performing unnecessary credit re-check.

If the system control unit 14 cannot confirm that the credit card is valid when the reservation where the online card settlement is designated is made, the system control unit 14 determines whether or not the error type is the "over credit limit amount", and if the system control unit 14 determines that the error type is the "over credit limit amount", the system control unit 14 performs the credit re-check. Therefore, it is possible to prevent the accommodation facility reservation server 1 from performing unnecessary credit re-check.

In the embodiment described above, the accommodation facility reservation server 1 performs the credit re-check on the credit frame clear date. However, the accommodation facility reservation server 1 may estimate a date, in one month, on which there is high probability that the credit for settling the accommodation fee is restored. In this case, the accommodation facility reservation server 1 may estimate this date from days included in one month. This date is referred to as "credit restoration date". The credit restoration date may be the credit frame clear date. The accommodation facility reservation server 1 may perform the credit re-check on the estimated credit restoration date. For example, the accommodation facility reservation server 1 records the reservation date on which the credit cannot be confirmed and the date on which the credit can be confirmed at the credit re-check as a history. There is a day on which the credit for settling the accommodation fee is restored from the day after the reservation date to the credit re-check date. Therefore, the accommodation facility reservation server 1 estimates the credit restoration date from the days included in the above period. The accommodation facility reservation server 1 estimates the date on which there is high probability that the credit for settling the accommodation fee is restored and performs the credit re-check on the estimated date, so that the accommodation facility reservation server 1 can increase the probability to be able to confirm the credit. When a credit card company does not publicize the credit frame clear date, it is effective to estimate the date on which there is high probability that the credit for settling the accommodation fee is restored.

Specifically, for example, a credit check history DB is constructed in the storage unit 12. In the credit check history DB, a credit check history including the reservation date on which the credit cannot be confirmed and a credit check history including the date on which the credit can be confirmed at the credit re-check are registered. More specifically, in the credit check history, the reservation number, the credit check date, the credit check type, and the credit card company information are associated with each other and stored. The reservation number indicates the reservation where the credit check is performed. The credit check date is either one of the reservation date on which the credit cannot be confirmed and the credit re-check date on which the credit can be confirmed. The credit check type is the type of the performed credit check. The credit check type is set to either one of "first" and "second". The "first" indicates the credit check when the reservation is made. The "second" indicates the re-credit check. The credit card company information indicates the credit card company which issued the credit card on which the credit check is performed.

In step S8 in the reservation process shown in Fig. 7, if the system control unit 14 determines that the error type is the "over credit limit amount" (step S8: YES), the system control unit 14 does not perform step S10 but performs step S11. In the settlement method change reservation process shown in Fig. 8, the system control unit 14 as the storage control means registers the credit check history after completing the process of step S28. Specifically, the system control unit 14 sets the credit check date to the reservation date. Further, the system control unit 14 sets the credit check type to the "first". The system control unit 14 acquires the credit card company information from the card information stored in the storage unit 12 in association with the user ID of the user who requests the reservation. Then, the system control unit 14 registers the credit check history including the new reservation number, the credit re-check date, the credit re-check type, and the credit card company information in the credit check history DB. In step S46 in the credit re-check process shown in Fig. 9, if the system control unit 14 determines that the credit can be confirmed (step S46: YES), the system control unit 14 as the storage control means registers the credit check history. Specifically, the system control unit 14 acquires the reservation number and the credit re-check date from the selected reservation information. Further the system control unit 14 sets the re-credit check type to the "second". Further, the system control unit 14 acquires the credit card company information from the first credit card information included in the selected reservation information. Then, the system control unit 14 registers the credit check history including the reservation number, the credit re-check date, the credit re-check type, and the credit card company information in the credit check history DB.

In step S29 in the settlement method change reservation process, the system control unit 14 does not set the credit re-check date to the credit frame clear date. Next, the system control unit 14 searches for the credit check history that includes the acquired credit card company information from a credit check history DB 12. Next, the system control unit 14 as the estimation means estimates the credit restoration date of the credit card issued by the credit card company indicated by the acquired credit card company information on the basis of the searched credit check history. The reason why the credit restoration date is estimated for each credit card company information is because the credit restoration date such as the credit frame clear date may vary for each credit card company information. Specifically, the system control unit 14 extracts sets of credit check histories that include the same reservation information from the searched credit check histories. The set of credit check histories that include the same reservation information is a combination of the credit check histories where the credit check type is the "first" and the credit check history where the credit check type is the "second". The system control unit 14 specifies the mean date between the reservation date and the credit re-check date. Specifically, the system control unit 14 calculates the number of days from the credit check date included in the credit check history where the credit check type is the "first" to the credit check date included in the credit check history where the credit check type is the "second". Next, the system control unit 14 calculates the mean date by adding one-half of the calculated number of days to the credit check date included in the credit check history where the credit check type is the "first". At this time, the system control unit 14 determines the mean date by extracting only day from the calculated year, month, and day. For example, it is assumed that the reservation date is January 25, 2012 and the credit re-check date is February 10, 2012. In this case, the mean date is February 2, 2012, which is eight days after January 25. However, the final mean date is 2, which is obtained by removing February and 2012 from February 2, 2012. The system control unit 14 calculates the mean date for each extracted set of credit check histories. Next, the system control unit 14 specifies a date on which the mean dates are concentrated as the credit restoration date on the basis of the distribution of the mean dates in one month. For example, the system control unit 14 may specify a date where the largest number of the mean dates are present as the credit restoration date. Or, the system control unit 14 may specify a date where a predetermined ratio or more of the mean dates of the calculated mean dates are present as the credit restoration date. In this case, the system control unit 14 may specify a plurality of credit restoration dates. Or, the system control unit 14 may divide one month into a plurality of periods and specify a period where a predetermined ratio or more of the mean dates are present. Then, the system control unit 14 may specify the mean date of the specified period as the credit restoration date or may specify each date from the first date to the last date of the specified period as the credit restoration date.

When the system control unit 14 estimates the credit restoration date, the system control unit 14 determines whether or not there is the estimated credit restoration date in a period from tomorrow to the previous day of the check-in date. At this time, if the system control unit 14 determines that there is the credit restoration date in a period from tomorrow to the previous day of the check-in date, the system control unit 14 sets the credit re-check date included in the online card settlement management information to the estimated credit restoration date. If there is a plurality of credit restoration dates in a period from tomorrow to the previous day of the check-in date, the system control unit 14 sets the credit re-check date to any one of the credit restoration dates. At this time, the system control unit 14 may set the credit re-check date to the credit restoration date where there is the highest probability that the credit is restored. For example, the system control unit 14 may set the credit re-check date to a date where the largest number of the mean dates are present by selecting from the credit restoration dates included in a period from tomorrow to the previous day of the check-in date. On the other hand, if the system control unit 14 determines that there is no credit restoration date in a period from tomorrow to the previous day of the check-in date, the system control unit 14 sets the credit re-check date to any day included in a period from tomorrow to the previous day of the check-in date. After setting the credit re-check date, the system control unit 14 proceeds to step S30.

In the embodiment described above, the present invention is applied to offering an accommodation facility. However, the present invention can be applied to any service if the date of use of the service is determined when a reservation is made. Examples of such services include offering an athletic facility such as a golf course and transportation of people by a transportation facility such as an aircraft, a train, a ship, and a passenger vehicle.

### Reference Signs List

- 1: Accommodation facility reservation server
- 2: Settlement server
- 3: Accommodation facility terminal
- 4: User terminal
- 11: Communication unit
- 12: Storage unit
- 12a: Member information DB
- 12b: Accommodation facility information DB
- 12c: Reservation information DB
- 13: Input/output interface
- 14: System control unit
- 14a: CPU
- 14b: ROM
- 14c: RAM
- 15: System bus
- NW: Network
- S: Information processing system

## Claims

1. An information processing apparatus, comprising:
a reservation means that, when validity of a designated credit card cannot be confirmed for a request of a reservation where a usage fee is settled by the designated credit card on or after a date of use of a service, accepts the reservation and stores information of the designated credit card in a storage means;
a check means that, after the reservation is accepted by the reservation means, checks the validity of the designated credit card on the basis of the information stored in the storage means; and
an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.

2. The information processing apparatus according to claim 1, wherein
when a number of days of use of the service whose reservation is accepted by the reservation means is greater than or equal to a number of credit days which corresponds to a period where credit of settlement using the credit card is given, the check means checks the validity of the designated credit card by the day before a date on which use of the service where reservation is accepted is started.

3. The information processing apparatus according to claim 2, further comprising:
a second check means that, after the validity of the designated credit card can be confirmed by the check means, checks the validity of the designated credit card on the basis of the information stored in the storage means on or after a date on which a number of days to a settlement date of the usage fee is the number of the credit days, and
wherein, when the validity of the designated credit card cannot be confirmed by the second check means, the output means outputs information indicating that the settlement method is determined to be a method different from the settlement method by the designated credit card.

4. The information processing apparatus according to any one of claims 1 to 3, further comprising:
a settlement means that, when a fee is incurred by use of a reserved service in addition to the usage fee for which the validity of the designated credit card can be confirmed by the check means, performs settlement of the usage fee including the incurred fee by the designated credit card on the basis of the information stored in the storage means.

5. The information processing apparatus according to any one of claims 1 to 4, further comprising:
a determination means that determines whether or not a reason why the validity of the designated credit card for the request cannot be confirmed is because the usage fee exceeds available credit of the designated credit card,
wherein, when the determination means determines that the reason is because the usage fee exceeds available credit of the designated credit card, the reservation means accepts the reservation and stores the information of the designated credit card in the storage means.

6. The information processing apparatus according to any one of claims 1 to 5, further comprising:
a storage control means that stores a validity check date of the designated credit card for the request and a validity check date by the check means in a check date storage means; and
an estimation means that estimates a date on which the designated credit card becomes valid on the basis of the check dates stored in the check date storage means,
wherein the check means checks validity of the designated credit card on a date estimated by the estimation means.

7. An information processing method executed by a computer, the information processing method comprising:
a reservation step of, when validity of a designated credit card cannot be confirmed for a request of a reservation where a usage fee is settled by the designated credit card on or after a date of use of a service, accepting the reservation and storing information of the designated credit card in a storage means;
a check step of, after the reservation is accepted in the reservation means, checking the validity of the designated credit card on the basis of the information stored in the storage means; and
an output step of outputting information indicating that a settlement method is determined to be a settlement by the designated credit card when the validity of the designated credit card can be confirmed in the check step and outputting information indicating that the settlement method is determined to be a method different from the settlement by the designated credit card when the validity of the designated credit card cannot be confirmed in the check step.

8. An information processing program that causes a computer to function as:
a reservation means that, when validity of a designated credit card cannot be confirmed for a request of a reservation where a usage fee is settled by the designated credit card on or after a date of use of a service, accepts the reservation and stores information of the designated credit card in a storage means;
a check means that, after the reservation is accepted by the reservation means, checks the validity of the designated credit card on the basis of the information stored in the storage means; and
an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.

9. A recording medium that computer-readably stores an information processing program that causes a computer to function as:
a reservation means that, when validity of a designated credit card cannot be confirmed for a request of a reservation where a usage fee is settled by the designated credit card on or after a date of use of a service, accepts the reservation and stores information of the designated credit card in a storage means;
a check means that, after the reservation is accepted by the reservation means, checks the validity of the designated credit card on the basis of the information stored in the storage means; and
an output means that outputs information indicating that a settlement method is determined to be a settlement by the designated credit card when the validity of the designated credit card can be confirmed by the check means and outputs information indicating that the settlement method is determined to be a method different from the settlement by the designated credit card when the validity of the designated credit card cannot be confirmed by the check means.
